# EUROPÄISCHE PATENTSCHRIFT

(11) **EP 1 678 254 B1**
(45) Veröffentlichungstag und Bekanntmachung des Hinweises auf die Patenterteilung: **09.05.2007**
(21) Anmeldenummer: 04790383.6
(22) Anmeldetag: 14.10.2004
(51) Int. Cl.: C08L 71/00, C08L 71/02

(54) **FESTIGKEITSOPTIMIERTE POLYMERE MIT GEMISCHTEN OXYALKYLENEIHEITEN**
POLYMERS WITH IMPROVED STRENGTH COMPRISING MIXED OXYALKYL UNITS
POLYMERES A RESISTANCE OPTIMISEE CONTENANT DES UNITES OXYALKYLE MELANGEES

(30) Priorität: 29.10.2003 DE 10350481
(43) Veröffentlichungstag der Anmeldung: 12.07.2006
(73) Patentinhaber: Henkel Kommanditgesellschaft auf Aktien, 40589 Düsseldorf (DE)
(72) Erfinder: BACHON, Thomas, 40597 Düsseldorf (DE); LAMBERTZ, Jennifer, 40764 Langenfeld (DE); FERENCZ, Andreas, 40223 Düsseldorf (DE); KÖPNICK, Friedhelm, 40229 Düsseldorf (DE); MAJOLO, Martin, 41812 Erkelenz (DE)
(86) Internationale Anmeldenummer: PCT/EP2004/011520
(87) Internationale Veröffentlichungsnummer: WO 2005/047394

(56) Entgegenhaltungen:
- EP-A- 0 623 653
- EP-A- 0 677 543
- EP-A- 1 457 510
- WO-A-00/59516
- WO-A-01/27185
- WO-A-03/063287
- WO-A-20/04048472
- US-A- 5 429 759
- US-A- 5 888 322
- PATENT ABSTRACTS OF JAPAN Bd. 2003, Nr. 11, 5. November 2003 (2003-11-05) & JP 2003 187637 A (DAISO CO LTD), 4. Juli 2003 (2003-07-04)

## Beschreibung

Die Erfindung betrifft polymere Zubereitungen, insbesondere Polyurethane, die unter Verwendung eines Gemischs von zwei oder mehr Polyolen herstellbar sind, Verfahren zur Herstellung solcher Zubereitungen sowie die Verwendung solcher Zubereitungen.

Polyurethane haben als vielseitig verwendbare Kunststoffe insbesondere durch ihren Einsatz in Oberflächenbeschichtungsmitteln, Klebstoffen und in der Dichtungstechnologie Einzug in viele Technologiebereiche gehalten. Dabei kommt insbesondere denjenigen Polyurethanen besonderes Interesse zu, welche über reaktive Endgruppen verfügen, die sich durch Aktivierung mittels einer von Außen zugeführten Verbindung vernetzen lassen. Beispielsweise handelt es sich dabei um Endgruppen, die mit Wasser, beispielsweise in Form von Luftfeuchtigkeit, reagieren können.

Durch diese Form der Reaktivität wird es ermöglicht, die reaktiven Polyurethane in verarbeitbarem Zustand in der gewünschten Form an den gewünschten Ort zu bringen und durch Zugabe von Wasser, durch Einwirken von Luftfeuchtigkeit oder sonstigen mit den Endgruppen reaktiven Verbindungen auszuhärten. In der Regel erfolgt dabei die Zugabe des Härters vor der Verarbeitung, wobei dem Verarbeiter nach der Härterzugabe nur noch eine begrenzte Verarbeitungszeit zur Verfügung steht.

Zu den reaktiven Endgruppen zählen beispielsweise Isocyanat-Endgruppen. Polyurethane mit solchen Endgruppen härten bei geeigneter Funktionalität bereits unter Einfluss von Luftfeuchtigkeit aus. Allerdings kann es, beispielsweise in Anwesenheit von Wasser bei der Anwendung von Polyurethanen mit NCO-Endgruppen zur Bildung von Kohlendioxid kommen. Während dies in der Regel kein Problem darstellt, hat die Entwicklung von Kohlendioxid jedoch für manche Anwendungen nachteilige Effekte auf die Oberflächenstruktur. Weiterhin haften solche Polyurethane häufig nicht auf glatten inerten Oberflächen, beispielsweise auf Oberflächen aus Glas, Keramik, Metall und dergleichen.

Um hier Abhilfe zu schaffen, d. h. um eine feste und dauerhafte Verbindung von Polyurethanen mit den oben genannten Oberflächen zu ermöglichen, wurde im Stand der Technik vorgeschlagen, in solchen Fällen als reaktive Endgruppe beispielsweise eine Alkoxysilangruppe in das Polyurethan einzuführen.

Insbesondere Silylgruppen tragende Polymere haben in den letzten Jahren als Bindemittel für Kleb-, Dicht- und Schaumstoffe zunehmend an Bedeutung gewonnen. Bei diesen Polymeren handelt es sich in der Regel um Polyurethan-Präpolymere mit Alkoxysilan-Endgruppen. Jedoch werden auch andere Lösungen für die oben genannten Probleme im Stand der Technik vorgeschlagen.

So beschreibt beispielsweise die EP 0 265 929 B1 ein aushärtbares Polymeres, basierend auf einem Acrylsäureester und/oder Methacrylsäureester und einem aushärtbaren Oxyalkylenpolymeren. Insbesondere wird eine härtbare Masse beschrieben, umfassend
(a) ein Copolymerisat, das Silizium enthaltende funktionelle Gruppen aufweist, die zur Vernetzung durch Ausbildung von Siloxanbindungen in der Lage sind, und dessen Molekülkette aus 50 Gew.-% oder mehr
   (1) einer Alkylacrylatester-Monomereinheit und/oder einer Alkylmethacrylatester-Monomereinheit, die jeweils einen Alkylrest mit 1 bis 8 Kohlenstoffatomen aufweisen, und
   (2) einer Alkylacrylatester-Monomereinheit und/oder einer Alkylmethacrylatester-Monomereinheit, die jeweils einen Alkylrest mit mindestens 10 Kohlenstoffatomen aufweisen, besteht,
(b) ein Oxyalkylenpolymerisat mit Silizium enthaltenden funktionellen Gruppen, die zur Vernetzung durch Ausbildung von Siloxanbindungen in der Lage sind; und
(c) einen Härtungsbeschleuniger.

Im Allgemeinen sind elastische Klebstoffe auf Lösemittelbasis leicht zu handhaben. Jedoch weisen solche elastischen Klebstoffe Lösemittel als unerlässliche Bestandteile auf, die gegenüber der Umwelt toxisch sind und darüber hinaus entzündlich sind. Es wurden zahlreiche Versuche unternommen, diese Nachteile zu überwinden. Beispielsweise wurden Alternativen wie lösemittelfreie Klebstoffe und wässrige Kontaktklebstoffe entwickelt.

Die EP 0 677 543 A1 betrifft ein Verfahren zur Herstellung von Polyoxypropylen aus Propylenoxid sowie dessen weiterer Umsetzung zu einem Polyol und die anschließende Umsetzung mit einem organischen Polyisocyanat zu einem Polyurethanschaum. Diese Verbindungen haben den Nachteil, dass die erreichbaren Festigkeiten, insbesondere Bruchkraft und Bruchdehnung im vernetzten Zustand gering sind.

Die US 6,306,966 B1 beschreibt eine mittels Feuchtigkeit aushärtbare Zusammensetzung, die als Klebstoff geeignet ist. Die Zusammensetzung wird hergestellt, indem eine Komponente A, enthaltend
(i) Silylgruppen tragende Alkylacrylat- und/oder Alkylmethacrylat-Monomereinheiten mit einer Alkylgruppe mit 1 bis 8 Kohlenstoffatomen und
(ii) Silylgruppen tragende Alkylacrylat- und/oder Alkylmethacrylat-Monomereinheiten mit einer Alkylgruppe mit 10 oder mehr Kohlenstoffatomen und
(iii) ein Oxyalkylenpolymeres mit reaktiven Si-Gruppen
mit einer Komponente B, die ein amorphes Pulver mit einem Teilchendurchmesser von 0,01 bis 300 µm enthält, vermischt wird.

Die oben beschriebenen Systeme weisen jedoch einen Nachteil dahingehend auf, dass der mit solchen Zusammensetzungen erzielbaren Festigkeit in vielen Fällen zu enge Grenzen gesetzt sind. Darüber hinaus ist der zu betreibende Aufwand insbesondere bei der Einbeziehung von Polymerisaten in die Festigkeitsgebende Struktur eines Klebstoffs oft aufwändig.

Der vorliegenden Erfindung lag daher die Aufgabe zugrunde, Zusammensetzungen zur Verfügung zu stellen, welche die oben genannten Nachteile nicht aufweisen. Insbesondere war es Aufgabe der vorliegenden Erfindung, Zusammensetzungen zur Verfügung zu stellen, welche über eine hohe Festigkeit verfügen. Weiterhin war es Aufgabe der vorliegenden Erfindung, Herstellungsverfahren für die erfindungsgemäßen Zusammensetzungen zur Verfügung zu stellen.

Es wurde nun gefunden, dass Zusammensetzungen, insbesondere Polyurethane, welche unter Verwendung von einem Gemisch aus zwei oder mehreren Polyolen hergestellt werden, die oben genannten Nachteile des Standes der Technik nicht aufweisen. Besonders überraschend ist an dem erfindungsgemäßen Befund, dass sich das erfindungsgemäß eingesetzte Gemisch aus zwei oder mehr Polyolen in universeller Weise dazu eignet, vernetzenden Zusammensetzungen, die insbesondere auf Basis von Silylgruppen oder auf Basis von Isocyanatgruppen vernetzten, im vernetzten Zustand eine deutlich verbesserte Festigkeit zu vermitteln.

Gegenstand der Erfindung ist daher eine vernetzbare polymere Zusammensetzung mindestens enthaltend ein Polymeres mit einer unter geeigneten Bedingungen zur Vernetzung führenden Zahl an miteinander oder mit einem geeigneten Vernetzer reaktiven funktionellen Gruppen, wobei, die Zusammensetzung entweder
a) mindestens ein Polymeres enthält, dessen Polymerrückgrat mindestens zwei unterschiedliche Oxyalkyleneinheiten OX¹ und OX² enthält, wobei mindestens eine erste Oxyalkyleneinheit OX¹ mindestens zwei C-Atome zwischen zwei benachbarten Sauerstoffatomen aufweist und mindestens eine zweite Oxyalkyleneinheit OX² mindestens ein C-Atom mehr zwischen zwei benachbarten Sauerstoffatomen aufweist als die erste Oxyalkyleneinheit OX¹ oder
b) mindestens ein erstes Polymeres enthält, dessen Polymerrückgrat mindestens eine erste Oxyalkyleneinheit OX¹ aufweist, die mindestens zwei C-Atome zwischen zwei benachbarten Sauerstoffatomen aufweist und mindestens ein zweites Polymeres enthält, dessen Polymerrückgrat mindestens eine zweite Oxyalkyleneinheit OX² enthält, die mindestens ein C-Atom mehr zwischen zwei benachbarten Sauerstoffatomen aufweist als die erste Oxyalkyleneinheit OX¹ im ersten Polymeren oder
c) ein Gemisch aus Polymeren gemäß a) und b) enthält,
wobei das Gewichtsverhältnis von ersten Oxyalkyleneinheiten OX¹ die mindestens zwei C-Atome zwischen zwei benachbarten Sauerstoffatomen aufweisen und zweiten Oxyalkyleneinheiten OX², die mindestens ein C-Atom mehr zwischen zwei benachbarten Sauerstoffatomen aufweisen als die ersten Oxyalkyleneinheiten OX¹, 10:90 bis 90:10 beträgt.

Unter einer "Zusammensetzung" wird im Rahmen der vorliegenden Erfindung ein Stoffgemisch aus zwei oder mehr verschiedenen Stoffen verstanden. Dabei ist es im Rahmen des vorliegenden Textes bereits ausreichend, wenn eine Zusammensetzung gemäß der vorliegenden Erfindung beispielsweise einen bestimmten Polymertypen enthält, der aufgrund einer Polydispersität von größer 1 zwei oder mehr unterschiedliche Polymermoleküle enthält, wobei sich die Polymermoleküle gattungs- und herstellungsspezifisch typischerweise durch Molekulargewicht oder chemische Zusammensetzung oder beides unterscheiden.

Unter einer "Oxyalkyleneinheit" wird im Rahmen der vorliegenden Erfindung eine Einheit der allgemeinen Formel -O-R-O-verstanden, wobei R für einen linearen oder verzweigten, gesättigten oder ungesättigten Alkylrest mit 2 bis etwa 40 C-Atomen, einen gesättigten oder ungesättigten Cycloalkylrest mit 4 bis 18 C-Atomen oder einen Arylrest mit 6 bis 24 C-Atomen handelt, wobei die entsprechenden Reste R einen oder mehrere Substituenten aufweisen, können, die auf die Reaktivität der erfindungsgemäßen Zusammensetzung hinsichtlich der Vernetzung der funktionellen Gruppen keinen störenden oder zumindest keinen mehr als vermeidbar störenden Einfluss ausüben. Eine "Oxyalkyleneinheit" gemäß der vorliegenden Erfindung kann aus einer Abfolge -O-R-O- bestehen. Es ist jedoch erfindungsgemäß ebenfalls vorgesehen, dass eine entsprechende "Oxyalkyleneinheit" zwei oder mehr solcher Abfolgen aufweist, wobei es sich in solchen Fällen gemäß den üblichen Sprachgebrauch um einen "Polyether" handelt. Im Rahmen der vorliegenden Erfindung wird bereits eine Abfolge von zwei der oben genannten Oxyalkyleneinheiten als "Polyether" bezeichnet, entsprechendes gilt selbstverständlich auch für Abfolgen von mehr als zwei der oben gezeigten Oxyalkyleneinheiten.

Ein in einer erfindungsgemäßen Zusammensetzung enthaltenes Polymeres weist "eine unter geeigneten Bedingungen zur Vernetzung führende Zahl an miteinander oder mit einem geeigneten Vernetzer reaktiven funktionellen Gruppen" auf. Unter dem Begriff "Vernetzung" wird im Rahmen des vorliegenden Textes die Ausbildung eines Netzwerks gemäß der einschlägigen Definitionen der Polymerchemie verstanden. Ein in einer erfindungsgemäßen Zusammensetzung enthaltenes Polymeres muss daher nicht notwendigerweise mehr als zwei im Sinne einer Vernetzung monofunktionelle Gruppen aufweisen, die zur Vernetzung eingesetzt werden können. Es ist ebenso gut möglich, dass ein in einer erfindungsgemäßen Zusammensetzung enthaltenes Polymeres nur zwei solcher monofunktioneller Gruppen aufweist, die durch Zugabe eines geeigneten mehr als difunktionellen Vernetzers vernetzt werden können. Eine derartige im Sinne einer Vernetzung monofunktionelle Gruppe ist beispielsweise eine Isocyanatgruppe.

Weiterhin ist es erfindungsgemäß möglich und vorgesehen, dass ein in einer erfindungsgemäßen Zusammensetzung enthaltenes Polymeres eine oder mehrere im Sinne einer Vernetzung polyfunktionelle funktionelle Gruppen aufweist. Entsprechende funktionelle Gruppen verfügen beispielsweise über zwei oder mehr potentielle vorzugsweise kovalente Verknüpfungsstellen, so dass beispielsweise zwei solcher funktioneller Gruppen mit jeweils zwei Verknüpfungsstellen für insgesamt 4 Verknüpfungsstellen im Polymeren sorgen, so dass mit insgesamt zwei funktionellen Gruppen aufgrund der Polyfunktionalität der einzelnen funktionellen Gruppen eine Vernetzung erfolgen kann. In diesem Sinne geeignete funktionelle Gruppen sind beispielsweise die Silylgruppen.

Unter einer "Silylgruppe" wird im Rahmen der vorliegenden Erfindung eine funktionelle Gruppe der allgemeinen Formel I verstanden, 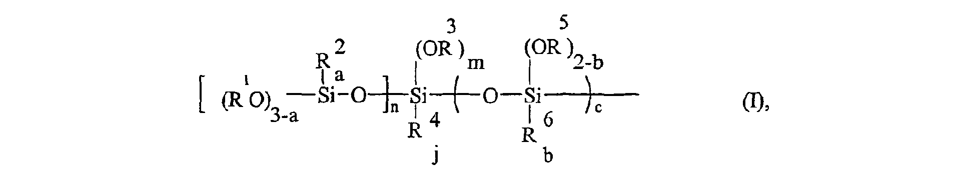 worin die Reste R¹ bis R⁶ jeweils unabhängig voneinander für einen linearen oder verzweigten, gesättigten oder ungesättigten Kohlenwasserstoffrest mit 1 bis etwa 24 C-Atomen, einen gesättigten oder ungesättigten Cycloalkylrest mit 4 bis etwa 24 C-Atomen oder einen Arylrest mit 6 bis etwa 24 C-Atomen stehen, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht

Grundsätzlich kann eine erfindungsgemäße Zusammensetzung Polymere enthalten, die im wesentlichen beliebige zur Vernetzung geeignete funktionelle Gruppen tragen. Entsprechende funktionelle Gruppen können an einer beliebigen Stelle innerhalb des Polymeren angeordnet sein. So ist es beispielsweise möglich, dass geeignete funktionelle Gruppen endständig am Polymeren angeordnet sind. Es ist jedoch ebenso vorgesehen, dass geeignete funktionelle Gruppen innerhalb des Polymerrückgrats an einer oder mehreren beliebigen Stellen oder an Seitenketten angeordnet sind.

Als funktionelle Gruppen eignen sich grundsätzlich alle funktionellen Gruppen, die aus sich selbst heraus oder durch Reaktion mit einem Vernetzer zu einer Vernetzung der in der Zusammensetzung enthaltenen entsprechenden Polymeren führen können. Dabei kann eine entsprechende Vernetzung beispielsweise durch bestimmte äußere Bedingungen hervorgerufen werden. Entsprechende äußere Bedingungen können beispielsweise das Erreichen einer bestimmten Temperatur, Licht, energiereiche Strahlung oder das Auftreten einer bestimmten Verbindung in der Atmosphäre, insbesondere das Auftreten von Feuchtigkeit sein. Während das Erzielen einer Vernetzung beispielsweise im Falle von Carboxylgruppen oder Epoxygruppen als funktionelle Gruppen üblicherweise durch Temperaturerhöhung oder im Falle von olefinisch ungesättigten Doppelbindungen beispielsweise durch das Einwirken von Licht oder sonstiger energiereiche Strahlung ermöglicht wird, sind im Rahmen der vorliegenden Erfindung solche Polymeren bevorzugt, die zur Vernetzung funktionelle Gruppen tragen, die unter Einfluss eines aus der Umgebung eingetragenen Stoffs, insbesondere unter Einfluss von Wasser oder unter Einfluss von Luftfeuchtigkeit, vernetzen. Im Rahmen einer bevorzugten Ausführungsform der vorliegenden Erfindung enthält eine erfindungsgemäße Zusammensetzung daher mindestens ein Polymeres das als reaktive funktionelle Gruppen entweder Isocyanatgruppen oder Silylgruppen oder beides trägt.

Grundsätzlich eignen sich im Rahmen der vorliegenden Erfindung beliebige Polymertypen. Im Rahmen einer bevorzugten Ausführungsform der vorliegenden Erfindung enthält eine erfindungsgemäße Zusammensetzung jedoch als Polymere beispielsweise Polyurethane, Polyether oder Polyester.

Der Begriff "Polyurethan" steht dabei für eine definierte Polyurethanstruktur, wie sie sich im Rahmen einer gezielten ein- oder mehrstufigen Polyurethansynthese erhalten lässt. Der Begriff umfasst alle Abweichungen von dieser Struktur, wie sie sich durch die statistische Natur des Polyadditionsverfahrens ergeben.

Im Rahmen einer ersten Ausführungsform der vorliegenden Erfindung enthält eine erfindungsgemäße Zusammensetzung mindestens ein Polymeres, dessen Polymerrückgrat mindestens zwei unterschiedliche Oxyalkyleneinheiten OX¹ und OX² enthält, wobei mindestens eine erste Oxyalkyleneinheit OX¹ mindestens zwei C-Atome zwischen zwei benachbarten Sauerstoffatomen aufweist und mindestens eine zweite Oxyalkyleneinheit OX² mindestens ein C-Atom mehr zwischen zwei benachbarten Sauerstoffatomen aufweist als die erste Oxyalkyleneinheit OX¹.

Entsprechend der im Rahmen dieses Textes vorgenommenen Definition des Begriffs "Oxyalkyleneinheit" unterscheiden sich die Oxyalkyleneinheiten OX¹ und OX² daher zumindest dahingehend, dass der Rest R in OX² mindestens 2 C-Atome mehr aufweist als der Rest R in OX¹. Dabei ist es Voraussetzung zur Erzielung des erfindungsgemäßen Effekts, dass sich die Reste R in OX¹ und OX² nicht nur insgesamt in der Zahl der C-Atome unterscheiden, sondern dass sich die Zahl der zwischen direkt benachbarten O-Atomen der Oxyalkyleneinheit in direkter und durchgehender Verbindung liegenden C-Atome um mindestens 1 C-Atom unterscheidet.

Im Rahmen einer bevorzugten Ausführungsform der vorliegenden Erfindung beträgt der Unterschied in der Zahl der C-Atome zwischen direkt benachbarten O-Atomen der Oxyalkyleneinheit in direkter und durchgehender Verbindung mindestens 2.

Ein in einer erfindungsgemäßen Zusammensetzung enthaltenes Polymeres kann im Rahmen der vorliegenden Erfindung derart aufgebaut sein, dass es die obengenannten Bedingungen hinsichtlich der Oxyalkyleneinheiten innerhalb jeweils einer Polymerkette, d. h., innerhalb jeweils eines Polymermoleküls verwirklicht. Es ist jedoch erfindungsgemäß ebenso vorgesehen, dass eine erfindungsgemäße Zusammensetzung mindestens ein erstes Polymeres enthält, dessen Polymerrückgrat mindestens eine erste Oxyalkyleneinheit OX¹ aufweist, die mindestens zwei C-Atome zwischen zwei benachbarten Sauerstoffatomen aufweist und mindestens ein zweites Polymeres enthält, dessen Polymerrückgrat mindestens eine zweite Oxyalkyleneinheit OX² enthält, die mindestens ein C-Atom mehr zwischen zwei benachbarten Sauerstoffatomen aufweist als die erste Oxyalkyleneinheit OX¹ im ersten Polymeren.

Darüber hinaus ist es im Rahmen der vorliegenden Erfindung möglich, dass eine erfindungsgemäße Zusammensetzung mindestens ein Polymeres enthält, dessen Polymerrückgrat mindestens zwei unterschiedliche Oxyalkyleneinheiten OX¹ und OX² enthält, wobei mindestens eine erste Oxyalkyleneinheit OX¹ mindestens zwei C-Atome zwischen zwei benachbarten Sauerstoffatomen aufweist und mindestens eine zweite Oxyalkyleneinheit OX² mindestens ein C-Atom mehr zwischen zwei benachbarten Sauerstoffatomen aufweist als die erste Oxyalkyleneinheit OX¹ und mindestens ein erstes Polymeres enthält, dessen Polymerrückgrat mindestens eine erste Oxyalkyleneinheit OX¹ aufweist, die mindestens zwei C-Atome zwischen zwei benachbarten Sauerstoffatomen aufweist und mindestens ein zweites Polymeres enthält, dessen Polymerrückgrat mindestens eine zweite Oxyalkyleneinheit OX² enthält, die mindestens ein C-Atom mehr zwischen zwei benachbarten Sauerstoffatomen aufweist als die erste Oxyalkyleneinheit OX¹ im ersten Polymeren.

Es ist zur Erzielung des erfindungsgemäßen Effekts weiterhin entscheidend, dass das Gewichtsverhältnis von ersten Oxyalkyleneinheiten OX¹ die mindestens zwei C-Atome zwischen zwei benachbarten Sauerstoffatomen aufweisen und zweiten Oxyalkyleneinheiten OX², die mindestens ein C-Atom mehr zwischen zwei benachbarten Sauerstoffatomen aufweisen als die ersten Oxyalkyleneinheiten OX¹, etwa 10:90 bis etwa 90:10 beträgt. Dabei hatte sich im Rahmen der vorliegenden Erfindung weiterhin herausgestellt, dass ein Verhältnis von etwa 20:80 bis etwa 80:20 oder etwa 30:70 bis etwa 70:30 oder etwa 40:60 bis etwa 60:40, beispielsweise 50:50, in Abhängigkeit von dem in der erfindungsgemäßen Zusammensetzung enthaltenen Polymeren besonders geeignet ist. Vorzugsweise werden im Rahmen der vorliegenden Erfindung jedoch Polymere oder Polymergemische eingesetzt, bei denen das Verhältnis OX¹ zu OX² so gestaltet ist, das es mehr als 1:1, vorzugsweise etwa 1,1:1 bis etwa 8,5:1 oder etwa 1,2:1 bis etwa 8:1 oder etwa 1,5:1 bis etwa 5:1 oder etwa 2:1 bis 4:1 beträgt.

Die Oxyalkyleneinheiten OX¹ und OX² können, sofern sie im Polymerrückgrat eines bestimmten Polymeren gemeinsam enthalten sind, im wesentlichen in beliebiger Abfolge auftreten. Es ist jedoch erfindungsgemäß bevorzugt, dass für den Fall, in dem das Polymerrückgrat mindestens eines Polymeren mindestens zwei unterschiedliche Oxyalkyleneinheiten OX¹ und OX² enthält, die Oxyalkyleneinheiten entweder
- statistisch oder
- blockweise gemäß dem Schema

   ...-OX¹-OX¹-OX¹- OX¹-OX²-OX²-OX² -OX²-...

   oder
- blockweise gemäß dem Schema

   ...-OX²-OX²-OX¹-OX¹-OX¹ -OX¹-OX²-OX²-...
angeordnet sind.

Eine blockweise Anordnung der Oxyalkyleneinheiten gemäß dem Schema ...-OX¹-OX¹-OX¹- OX¹-OX²-OX²-OX² -OX²-... bedeutet im Rahmen der vorliegenden Erfindung nicht, dass die Oxyalkyleneinheiten im erfindungsgemäß eingesetzten Polymeren tatsächlich im Sinne des obengenannten Schemas indirekter Abfolge kovalent miteinander verbunden sein müssen. Das obengenannte Schema dient lediglich zur Illustration der Abfolge der Oxyalkyleneinheiten im Polymeren, wobei zwischen den einzelnen Oxyalkyleneinheiten eine kovalente Bindung vorhanden sein kann, jedoch nicht sein muss. Es ist erfindungsgemäß ebenso möglich, dass zwischen einzelnen Oxyalkyleneinheiten oder zwischen einzelnen Blöcken gleicher oder unterschiedlicher Oxyalkyleneinheiten eine Molekülstruktur existiert, wie sie beispielsweise auf Grund einer Aufbaureaktion für ein Polymeres auftritt. Geeignete Strukturen, wie sie zwischen einzelnen Oxyalkyleneinheiten oder Blöcken von Oxyalkyleneinheiten auftreten können sind beispielsweise Strukturen, wie sie sich aus der Polykondensation oder der Polyaddition bekannter monomerer oder polymerer Einheiten ergeben, insbesondere können dies Esterbindungen oder Urethanbindungen sein. So kann beispielsweise die Verbindung von zwei Oxyalkyleneinheiten dahingehend erfolgen, dass entsprechende Oxyalkyleneinheiten mit OH-Gruppen mit Diisocyanaten umgesetzt werden. Dadurch entsteht eine Verbindung zwischen zwei Oxyalkyleneinheiten, die über eine zwei oder an Gruppen aufweisende Struktur erfolgt. Entsprechende Strukturen werden im Rahmen des vorliegenden Textes noch näher beschrieben.

Eine erfindungsgemäße Zusammensetzung lässt sich im wesentlichen auf beliebige, dem Fachmann bekannte Weise herstellen. Es hat sich jedoch herausgestellt, dass Verfahren, wie sie im Rahmen des nachfolgenden Textes näher erläutert werden, zu besonders guten Ergebnissen führen.

Gegenstand der vorliegenden Erfindung ist daher auch eine vernetzbare polymere Zusammensetzung, herstellbar durch Umsetzung von mindestens zwei Komponenten A und B, wobei
a) als Komponente A ein Isocyanat oder ein Polyisocyanat oder ein Gemisch aus zwei oder mehr Isocyanaten oder zwei oder mehr Polyisocyanaten oder einem Isocyanat und einem Polyisocyanat oder ein Gemisch aus zwei oder mehr Isocyanaten mit zwei oder mehr Polyisocyanaten und
b) als Komponente B ein Gemisch aus zwei oder mehr Polyole eingesetzt wird, wobei Komponente B mindestens zwei Polyole mit Oxyalkyleneinheiten OX¹ und OX² enthält, wobei OX² mindestens ein C-Atom mehr zwischen zwei benachbarten Sauerstoffatomen aufweist als OX¹ und das Mischungsverhältnis der beiden Polyole mit Oxyalkyleneinheiten OX¹ und OX² 10:90 bis 90:10, bezogen auf das Gewicht, beträgt.

Die erfindungsgemäße Zusammensetzung lässt sich daher im wesentlichen dadurch herstellen, dass ein lsocyanat oder ein Polyisocyanat oder deren Gemisch, wie oben näher erläutert, mit einem Gemisch aus zwei oder mehr Polyolen gemäß der oben beschriebenen Definition umgesetzt wird.

Als Komponente A wird im Rahmen der vorliegenden Erfindung beispielsweise ein Polyisocyanat oder ein Gemisch aus zwei oder mehr Polyisocyanaten eingesetzt. Grundsätzlich eignen sich daher zur Herstellung der erfindungsgemäßen Polyisocyanate alle Verbindungen, die zwei oder mehr Isocyanuratgruppen aufweisen. Unter Polyisocyanaten werden Verbindungen verstanden, die mindestens zwei Isocyanat-Gruppen (NCO-Gruppen) tragen. Beispielsweise sind dies Verbindungen der allgemeinen Struktur O=N=C-Z-C=N=O, wobei Z ein linearer oder verzweigter aliphatischer, alicyclischer oder aromatischer Kohlenwasserstoffrest ist, der gegebenenfalls weitere inerte oder in die Umsetzung eingreifende Substituenten aufweisen kann. Es kann sich daher bei derartigen Verbindungen um monomere Verbindungen handeln, beispielsweise um Polyisocyanate. Es jedoch erfindungsgemäß ebenso möglich als Verbindung mit zwei oder mehr Isocyanuratgruppen eine Verbindung einzusetzen, die durch Umsetzung entsprechender Bausteine, insbesondere durch Umsetzung von Polyisocyanaten mit Polyolen oder Polyaminen, erhältlich ist. Beispielsweise wird im Rahmen der vorliegenden Erfindung als Verbindung mit zwei oder mehr Isocyanatgruppen ein Polyurethanpräpolymeres oder ein Gemisch aus zwei oder mehr davon eingesetzt das sich durch Umsetzung eines Polyisocyanats oder eines Gemischs aus zwei oder mehr Polyisocyanaten mit einem Polyol oder einem Gemisch aus zwei oder mehr Polyolen oder einem Polyamin oder einem Gemisch aus zwei oder mehr Polyaminen herstellen lässt.

Als Polyisocyanate zum erfindungsgemäßen Einsatz als Komponente A kommen beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3 und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendiisocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenytmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H₁₂-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

Als Gemische dieser Isocyanate sind besonders die Gemische der jeweiligen Strukturisomeren von Diisocyanatotoluol und Diisocyanatodiphenylmethan von Bedeutung, insbesondere das Gemisch aus 80 mol-% 2,4-Diisocyanatotoluol und 20 mol-% 2,6-Diisocyanatotoluol geeignet. Weiterhin sind die Gemische von aromatischen lsocyanaten, wie 2,4-Diisocyanatotoluol und/oder 2,6-Diisocyanatotoluol mit aliphatischen oder cycloaliphatischen Isocyanaten, wie Hexamethylendiisocyanat oder IPDI besonders vorteilhaft, wobei das bevorzugte Mischungsverhältnis der aliphatischen zu den aromatischen Isocyanaten etwa 4 : 1 bis 1 : 4 beträgt.

Ebenso im Sinne der vorliegenden Erfindung als Polyisocyanate zur Herstellung der Komponente A geeignet sind drei- oder höherwertige lsocyanate, wie sie beispielsweise durch Oligomerisierung von Diisocyanaten, insbesondere durch Oligomerisierung der oben genannten Isocyanate, erhältlich sind. Beispiele für solche drei- oder höherwertigen Polyisocyanate sind die Triisocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Wenn im Rahmen der vorliegenden Erfindung in einer erfindungsgemäßen Zusammensetzung ein Polymeres enthalten ist, das unter Verwendung eines Polyurethanpräpolymeren hergestellt wurde, so werden dabei erfindungsgemäß bevorzugt solche Polyurethanpräpolymeren eingesetzt, die durch Umsetzung von einem Polyisocyanat oder einem Gemisch aus zwei oder mehreren Polyisocyanaten mit einer Verbindung mit mindestens zwei aktiven Wasserstoffatomen oder einem Gemisch aus zwei oder mehr solcher Verbindungen erhältlich sind.

Als Verbindung mit mindestens zwei aktiven Wasserstoffatomen werden im Rahmen der vorliegenden Erfindung insbesondere Verbindungen mit zwei oder mehr OH-Gruppen (Polyole), Verbindungen mit einer Aminogruppe oder zwei oder mehr gegebenenfalls ganz oder teilweise einfach substituierten Aminogruppen, Verbindungen mit mindestens zwei Carbonsäuregruppen oder Verbindungen mit mindestens zwei Mercaptogruppen, oder Gemische aus zwei oder mehr davon, eingesetzt. Besonders bevorzugt sind im Rahmen der vorliegenden Erfindung Polyurethanpräpolymere, die unter Einsatz von Polyolen oder Polyaminen hergestellt wurden.

Zur Herstellung eines im Rahmen der vorliegenden Erfindung als Komponente A oder als Bestandteil von Komponente A geeigneten Polyurethanpräpolymeren kann daher im Rahmen der vorliegenden Erfindung bei der Polyurethansynthese ein Polyol oder ein Gemisch aus zwei oder mehr Polyolen eingesetzt werden.

Der Begriff "Polyol" umfasst im Rahmen der vorliegenden Erfindung eine Verbindung, die mindestens zwei OH-Gruppen aufweist, unabhängig davon, ob die Verbindung noch weitere funktionelle Gruppen aufweist. Vorzugsweise umfasst ein im Rahmen der vorliegenden Erfindung eingesetztes Polyol jedoch nur OH-Gruppen als funktionelle Gruppen, oder sofern weitere funktionelle Gruppen vorliegen, sind alle weiteren funktionellen Gruppen zumindest gegenüber Isocyanaten unter den bei der Umsetzung von Polyisocyanat und Polyol herrschenden Bedingungen nicht reaktiv.

Bei den geeigneten Polyolen handelt es sich beispielsweise um Polyesterpolyole, die z.B. aus Ullmanns Enzyklopädie der technischen Chemie, 4. Aufl., Bd. 19, S. 62-65, bekannt sind. Bevorzugt werden Polyesterpolyole eingesetzt, die durch Umsetzung von zweiwertigen Alkoholen mit mehrwertigen, bevorzugt zweiwertigen Polycarbonsäuren erhalten werden. Die Polycarbonsäuren können aliphatisch, cycloaliphatisch, araliphatisch, aromatisch oder heterocyclisch sein und gegebenenfalls z.B. durch Halogenatome substituiert und/oder ungesättigt sein. Als Beispiele hierfür seien genannt Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure und/oder dimere Fettsäuren.

Die genannten Polycarbonsäuren können entweder einzeln als ausschließliche Säurekomponente oder im Gemisch untereinander zum Aufbau der Komponente A eingesetzt werden. Bevorzugt sind die Carbonsäuren der allgemeinen Formel HOOC-(CH₂)_{y}-COOH, wobei y eine Zahl von 1 bis 20, bevorzugt eine gerade Zahl von 2 bis 20, ist, z.B. Bernsteinsäure, Adipinsäure, Dodecandicarbonsäure und Sebacinsäure. Anstelle der freien Polycarbonsäuren können auch die entsprechenden Polycarbonsäureanhydride oder entsprechenden Polycarbonsäureester von niederen Alkoholen oder deren Gemische zur Herstellung der Polyesterpolyole verwendet werden.

Als mehrwertige Alkohole zur Reaktion mit der Polycarbonsäurekomponente zum Aufbau der Komponente A kommen z.B. Ethylenglykol, Propan-1,2-diol, Propan-1,3-diol, Butan-1,3-diol, Buten-1,4-diol, Butin-1,4-diol, Pentan-1,5-diol, Hexan-1,6-diol, Neopentylglykol, Bis-(hydroxymethyl)cyclohexane, wie 1,4-Bis(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykole, Dibutylenglykol und Polybutylenglykol in Betracht. Bevorzugt sind Neopentylglykol und Alkohole der allgemeinen Formel HO-(CH₂)ₓ-OH, wobei x eine Zahl von 1 bis 20, bevorzugt eine gerade Zahl von 2 bis 20, ist. Beispiele hierfür sind Ethylenglykol, Butan-1,4-diol, Hexan-1,6-diol, Octan-1,8-diol und Dodecan-1,12-diol.

Ferner kommen als Polyole auch Polycarbonatdiole, wie sie z.B. durch Umsetzung von Phosgen mit einem Überschuss von den als Aufbaukomponenten für die Polyesterpolyole genannten niedermolekularen Alkohole erhalten werden können, in Betracht.

Geeignet sind als Polyole auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Beispiele für geeignete Lactone sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Auch niedermolekulare Polyesterdiole oder Polyetherdiole können als Starter zur Herstellung der Lactonpolymerisate eingesetzt werden. Anstelle der Polymerisate von Lactonen können auch die entsprechenden chemisch äquivalenten Polykondensate der den Lactonen entsprechenden Hydroxycarbonsäuren eingesetzt werden.

Die Polyesterpolyole können auch unter Zuhilfenahme untergeordneter Mengen an mono- und/oder höherfunktionellen Monomeren aufgebaut werden.

Ebenfalls als Polyolkomponente geeignet sind OH-Gruppen tragende Polyacrylate, welche beispielsweise durch die Polymerisation von ethylenisch ungesättigten Monomeren, die eine OH-Gruppe tragen, erhältlich sind. Solche Monomere sind beispielsweise durch die Veresterung von ethylenisch ungesättigten Carbonsäuren und difunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Daneben kommen als Polyole Polyetherdiole oder Polyetherpolyole in Betracht. Sie sind insbesondere durch Polymerisation von Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Wasser, Alkohole oder Amine, z.B. Propan-1,2-diol, Propan-1,3-diol, 1,2-Bis(4-hydroxydiphenyl)-propan oder Anilin, erhältlich.

Sowohl zur Herstellung der Polyesterpolyole als auch zur Herstellung der Polyetherpolyole können Alkohole mit einer Funktionalität von mehr als zwei in untergeordneten Mengen eingesetzt werden. Insbesondere sind dies Verbindungen wie beispielsweise Trimethylolpropan, Pentaerythrit, Glycerin, Zucker, wie beispielsweise Glucose, oligomerisierte Polyole wie beispielsweise di- oder trimere Ether von Trimethylolpropan, Glycerin oder Pentaerythrit, teilveresterte polyfunktionelle Alkohole der oben beschriebenen Form, wie beispielsweise teilverestertes Trimethylolpropan, teilverestertes Glycerin, teilveresterter Pentaerythrit, teilverestertes Polyglyzerin und dergleichen, wobei zur Veresterung vorzugsweise monofunktionelle aliphatische Carbonsäuren benutzt werden. Gegebenenfalls können die Hydroxylgruppen der Polyole durch Umsetzung mit Alkylenoxiden verethert sein. Die vorstehenden Verbindungen sind ebenfalls als Starterkomponente zum Aufbau der Polyetherpolyole geeignet.

Vorzugsweise werden die Polyolverbindungen mit einer Funktionalität > 2 nur in untergeordneten Mengen zum Aufbau der Polyesterpolyole bzw. Polyetherpolyole herangezogen.

Ebenfalls als Polyole geeignet sind Polyhydroxyolefine, bevorzugt solche mit zwei endständigen Hydroxylgruppen, z.B. α,ω-Dihydroxypolybutadien, α,ω-Dihydroxypolymethacrylester oder α,ω-Dihydroxypolyacrylester.

Als weitere Polyole werden auch die oben genannten kurzkettigen Alkandiole eingesetzt, wobei Neopentylglykol und die unverzweigten Diole mit 2 bis 12 C-Atomen, beispielweise Propylenglykol, 1,4-Butandiol, 1,5-Pentandiol oder 1,6-Hexandiol, bevorzugt werden.

Die als einsetzbar aufgezählten Polyole können auch als Gemische in beliebigen Verhältnissen eingesetzt werden.

Ebenfalls zur Herstellung entsprechender Polyurethanpräpolymere geeignet sind im Rahmen der vorliegenden Erfindung Polyaminen. Besonders geeignet sind dabei beispielsweise Polyether mit endständigen Aminogruppen oder polymere Verbindungen, die eine oder mehrere Amino- oder Imino-Gruppen aufweisen. Als Polyamine können beispielsweise auch mehr als zweiwertige Verbindungen eingesetzt werden, die mindestens eine primäre oder sekundäre oder, insofern mehr als eine Aminogruppe pro Molekül vorhanden ist, auch primäre und sekundäre Aminogruppen gleichzeitig aufweisen können. Hierzu zählen beispielsweise Verbindungen wie Hydrazin, Ethylendiamin, 1,2- und 1,3-Porpylendiamin, Butylendiamine, Pentamethylendiamine, Hexamethylendiamine wie beispielsweise das 1,6-Hexamethylendiamin, Alkylhexamethylendiamine wie beispielsweise das 2,4-Dimethylhexamethylendiamin, allgemein Alkylendiamine mit bis zu etwa 44 C-Atomen, wobei auch cyclisch oder polycyclische Alkylendiamine eingesetzt werden können wie sie z.B. aus den Dimerisierungsprodukten ungesättigter Fettsäuren in bekannter Weise gewonnen werden können. Ebenfalls einsetzbar, aber nicht bevorzugt, sind aromatische Diamine wie beispielsweise 1,2-Phenylendiamin, 1,3-Phenylendiamin oder 1,4-Phenylendiamin. Ferner können im Sinne der Erfindung höhere Amine, wie z.B.

Diethylentriamin, Aminomethyldiaminooctan-1,8 und Triethylentetramin eingesetzt werden.

Neben den Aminogruppen können die entsprechenden Aminoverbindungen noch weitere funktionelle Gruppen, insbesondere Isocyanaten gegenüber reaktive Gruppen, aufweisen. Hierzu zählen insbesondere die Hydroxylgruppe oder die Mercaptogruppe.

Zu den im Sinne der Erfindung als Polyamine einsetzbaren Verbindungen zählen beispielsweise auch niedermolekulare Aminoverbindungen die gegebenenfalls noch eine oder mehrere gegenüber Isocyanatgruppen reaktive Gruppen aufweisen. Beispielsweise sind dies Monoaminoalkohole mit einer aliphatisch gebundenen Hydroxylgruppe, wie Ethanolamin, N-Methylethanolamin, N-Ethylethanolamin, N-Butylethanolamin, N-Cyclohexylethanolamin, N-tert.-Butylethanolamin, Leucinol, lsoleucinol, Valinol, Prolinol, Hydroxyethylanilin, 2-(Hydroxymethyl)-piperidin, 3-(Hydroxymethyl)-piperidin, 2-(2-hydroxyethyl)-piperidin, 2-Amino-2-phenylethanol, 2-Amino-1-phenylethanol, Ephedrin, p-Hydroxyephedrin, Norephedrin, Adrenalin, Noradrenalin, Serin, Isoserin, Phenylserin, 1,2-Diphenyl-2-amino-ethanol, 3-Amino-1-propanol, 2-Amino-1-propanol, 2-Amino-2-methyl-1-propanol, Isopropanolamin, N-Ethylisopropanolamin, 2-Amino-3-phenylpropanol, 4-Amino-1-butanol; 2-Amino-1-butanol, 2-Aminoisobutanol, Neopentanolamin, 2-Amino-1-pentaol, 5-Amino-1-pentanol, 2-Ethyl-2-butyl-5-aminopentanol, 6-Amino-1-hexanol, 2-Amino-1-hexanol, 2-(2-Aminoethoxy)-ethanol, 3-(Aminomethyl)-3,5,5-trimethylcyclohexanol, 2-Aminobenzylalkohol, 3-Aminobenzylalkohol, 3-Amino-5-methylbenzylalkohol, 2-Amino-3-methylbenzylalkohl.

Wenn der Einsatz von Polyolen oder Polyaminen beispielsweise der Erzeugung von Kettenverzweigungen dienen soll, so lassen sich z.B. Monoaminopolyole mit zwei aliphatisch gebundenen Hydroxylgruppen, wie 1-Amino-2,3-propandiol, 2-Amino-1,3-propandiol, 2-Amino-2-methyl-1,3-propandiol, 2-Amino-2-ethyl-1,3-propandiol, 2-Amino-1-phenyl-1,3-propandiol, Diethanolamin, Diisopropanolamin, 3-(2-Hydroxyethylamino)propanol und N-(3-Hydroxypropyl)-3-hydroxy-2,2-dimethyl-1-aminogruppen einsetzen.

Wenn im Rahmen der vorliegenden Erfindung als Komponente A ein Polyurethanpräpolymeres eingesetzt wird, so weist ein derartiges Polyurethanpräpolymeres üblicherweise keine Abfolge von Oxyalkyleneinheiten OX¹ und OX² auf, wie sie im Rahmen des vorliegenden Textes erfordert wird. Wenn ein entsprechendes Polyurethanpräpolymeres eine solche Abfolge von Oxyalkyleneinheiten OX¹ und OX² aufweist, so handelt es sich dabei bereits um ein Polymeres, wie es in einer erfindungsgemäßen Zubereitung vorliegt. Ein solches Polyurethanpräpolymeres weist nämlich dann entsprechend eine Abfolge von Oxyalkyleneinheiten OX¹ und OX² auf, wie sie erfindungsgemäß gefordert wird. Darüber hinaus weist ein entsprechendes Polyurethanpräpolymeres NCO-Endgruppen auf, die unter Einsatz eines geeigneten Vernetzers, beispielsweise unter Einsatz eines mehr als difunktionellen Polyols, vernetzbar sind.

Es ist im Rahmen der vorliegenden Erfindung, wie oben beschrieben, möglich, dass als Komponente A eine Verbindung mit zwei oder mehr Isocyanatgruppen eingesetzt wird. Es ist jedoch erfindungsgemäß ebenso möglich und vorgesehen, dass die Komponente A ausschließlich aus Verbindungen besteht, die mindestens eine Silylgruppe gemäß der obengenannten Definition und mindestens einer Isocyanatgruppe aufweisen. Weiterhin ist es erfindungsgemäß möglich, dass die Komponente A teilweise aus Verbindungen besteht, die mindestens eine Silylgruppe gemäß der obengenannten Definition und mindestens einer Isocyanatgruppe aufweisen, wobei der verbleibende Teil beispielsweise aus Polyisocyanaten bestehen kann. Werden die letztgenannten Verbindungen als Bestandteil von Komponente A eingesetzt oder besteht die Komponente A aus derartigen Verbindungen, so werden erfindungsgemäße Zusammensetzungen erhalten, die Polymere enthalten, die eine oder mehrere Silyl-Endgruppen aufweisen.

Es ist im Rahmen der vorliegenden Erfindung daher vorgesehen, dass als Isocyanat ein mindestens eine Silylgruppe tragendes Isocyanat eingesetzt wird. Als Komponente A oder als Bestandteil von Komponente A geeignete Isocyanatgruppen tragende Silane sind beispielsweise Methyldimethoxysilylmethylisocyanat, Trimethoxysilylmethylisocyanat, Diethylmethoxysilylmethylisocyanat, Ethyldimethoxysilylmethylisocyanat, Methyldiethoxysilylmethylisocyanat, Triethoxysilylmethylisocyanat, Ethyldiethoxysilylmethylisocyanat, Methyldimethoxysilylethylisocyanat, Trimethoxysilylethylisocyanat, Ethyldimethoxysilylethylisocyanat, Methyldiethoxysilylethylisocyanat, Triethoxysilylethylisocyanat, Ethyldiethoxysilylethylisocyanat, Methyldimethoxysilylpropylisocyanat, Trimethoxysilylpropylisocyanat, Ethyldimethoxysilylpropylisocyanat, Methyldiethoxysilylpropylisocyanat, Triethoxysilylpropylisocyanat, Ethyldiethoxysilylpropylisocyanat, Methyldimethoxysilylbutylisocyanat, Trimethoxysilylbutylisocyanat, Triethylsilylbutylisocyanat, Diethylmethoxysilylbutylisocyanat, Ethyldimethoxysilylbutylisocyanat, Methyldiethoxysilylbutylisocyanat, Triethoxysilylbutylisocyanat, Diethylethoxysilylbutylisocyanat, Ethyldiethoxysilylbutylisocyanat, Methyldimethoxysilylpentylisocyanat, Trimethoxysilylpentylisocyanat, Triethylsilylpentylisocyanat, Ethyldimethoxysilylpentylisocyanat, Methyldiethoxysilylpentylisocyanat, Triethoxysilylpentylisocyanat, Diethylethoxysilylpentylisocyanat, Ethyldiethoxysilylpentylisocyanat, Methyldimethoxysilylhexylisocyanat, Trimethoxysilylhexylisocyanat, Ethyldimethoxysilylhexylisocyanat, Methyldiethoxysilylhexylisocyanat, Triethoxysilylhexylisocyanat, Ethyldiethoxysilylhexylisocyanat, γ-Trimethoxysiloxydimethylsilylpropylisocyanat, γ-Trimethylsiloxydimethoxysilylpropylisocyanat, γ-Triethoxysiloxydiethylpropylisocyanat, γ-Triethoxysiloxydiethoxysilylpropylisocyanat, oder Gemische aus zwei oder mehr davon.

Als Ergebnis der Durchführung des obengenannten Verfahrens werden also erfindungsgemäße Zusammensetzungen erhalten, die Polymere gemäß der obengenannten Definition enthalten. Entsprechende Polymere weisen im Rahmen der obengenannten Handlungsanweisung entweder einer Isocyanatgruppe oder zwei oder mehr Isocyanatgruppen oder eine Silylgruppe oder zwei oder mehr Silylgruppen oder eine Isocyanatgruppe oder zwei oder mehr Isocyanatgruppen und eine Silylgruppe oder eine Isocyanatgruppe und eine Silylgruppe oder zwei oder mehr Silylgruppen oder zwei oder mehr Isocyanatgruppen und zwei oder mehr Silylgruppen, gemäß der obengenannten Definition, auf.

Während die oben beschriebenen Herstellungsweise zu Zusammensetzungen führt, die eine im wesentlichen statistische bzw. eine auf Grund der unterschiedlichen Reaktivität von Oxyalkyleneinheiten gegebenenfalls bereits zumindest teilweise blockweise Anordnung aufweisen, lassen sich im Rahmen der vorliegenden Erfindung auch vernetzbare Zusammensetzungen herstellen, die eine davon abweichende Abfolge von Oxyalkyleneinheiten aufweisen.

Die vorliegende Erfindung betrifft daher auch eine vernetzbare polymere Zusammensetzung, herstellbar durch Umsetzung von mindestens drei Komponenten A, C und D, wobei
a) als Komponente A ein Isocyanat oder ein Polyisocyanat oder ein Gemisch aus zwei oder mehr Isocyanaten oder zwei oder mehr Polyisocyanaten oder einem Isocyanat und einem Polyisocyanat oder ein Gemisch aus zwei oder mehr Isocyanaten mit zwei oder mehr Polyisocyanaten und
b) als Komponente C ein Polyol mit Oxyalkyleneinheiten OX¹ und
c) als Komponente D ein Polyol mit Oxyalkyleneinheiten OX² eingesetzt wird,
wobei die Umsetzung in zwei oder mehr Schritten abläuft und in einem ersten Schritt Komponente A ganz oder teilweise mit der gesamten Komponente C oder einem Teil der Komponente C oder mit der gesamten Komponente D oder einem Teil der Komponente D umgesetzt wird und in einem zweiten Schritt das Reaktionsprodukt je nach Endgruppen und Reaktionsführung im ersten Schritt mit der gesamten verbleibenden Komponente A oder einem Teil der verbleibenden Komponente A oder mit der gesamten verbleibenden Komponente C oder einem Teil der verbleibenden Komponente C oder mit der gesamten verbleibenden Komponente D oder einem Teil der verbleibenden Komponente D umgesetzt wird und, je nach Reaktionsführung im ersten oder zweiten Schritt anschließend in einem oder mehreren weiteren Schritten die verbleibenden Komponenten A, C und D bis zum Verbrauch der Edukte mit dem Reaktionsprodukt der jeweils vorangehenden Stufe umgesetzt werden, wobei OX² mindestens ein C-Atom mehr zwischen zwei benachbarten Sauerstoffatomen aufweist als OX¹ und das Mischungsverhältnis der beiden Polyole mit Oxyalkyleneinheiten OX¹ und OX² im vernetzbaren Polymeren 10:90 bis 90:10, bezogen auf das Gewicht, beträgt.

Gemäß dem hier beschriebenen Verfahren werden Polymere enthaltende Zusammensetzungen erhalten, die Oxyalkyleneinheiten OX¹ und OX² aufweisen, deren Abfolge im wesentlichen durch die Abfolge der Reaktionsschritte mit Komponente C und Komponente D frei wählbar bestimmt werden können. Auch im Falle des hier beschriebenen Verfahrens können als Komponente A Silylgruppen tragende Isocyanate gemäß der obengenannten Definition eingesetzt werden.

Zur Einführung von Oxyalkyleneinheiten OX¹ und OX² können im Rahmen der vorliegenden Erfindung im wesentlichen beliebige, dem Fachmann bekannte Verbindungen eingesetzt werden.

Als im wesentlichen niedermolekulare Verbindungen, welche zur Einführung von Oxyalkyleneinheiten OX¹ und OX² geeignet sind, gelten beispielsweise Ethylenglykol, Propan-1,2-diol, Propan-1,3-diol, Butan-1,3-diol, Buten-1,4-diol, Butin-1,4-diol, Pentan-1,5-diol, Hexan-1,6-diol, Neopentylglykol, Bis-(hydroxymethyl)cyclohexane, wie 1,4-Bis(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykole, Dibutylenglykol und Polybutylenglykol in Betracht. Bevorzugt sind Neopentylglykol und Alkohole der allgemeinen Formel HO-(CH₂)ₓ-OH, wobei x eine Zahl von 1 bis 20, bevorzugt eine gerade Zahl von 2 bis 20, ist. Beispiele hierfür sind Ethylenglykol, Butan-1,4-diol, Hexan-1,6-diol, Octan-1,8-diol und Dodecan-1,12-diol.
Darüber hinaus sind im Rahmen der vorliegenden Erfindung polymere Verbindungen geeignet, insbesondere Polyetherdiole oder Polyetherpolyole. Sie sind insbesondere durch Polymerisation von Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Wasser, Alkohole oder Amine, z.B. Propan-1,2-diol, Propan-1,3-diol, 1,2-Bis(4-hydroxydiphenyl)-propan oder Anilin, erhältlich.

Besonders bevorzugt sind im Rahmen der vorliegenden Erfindung als Oxyalkyleneinheiten OX¹ Verbindungen, die zwischen zwei benachbarten Sauerstoffatomen zwei C-Atome aufweisen, Insbesondere sind dies die Reaktionsprodukte einer entsprechende Umsetzung von Propylenoxid, Butylenoxid, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Wasser, Alkohole oder Amine. Als Oxyalkyleneinheiten OX² eignen sich insbesondere Verbindungen wie Butan-1,3-diol, Buten-1,4-diol, Butin-1,4-diol, Pentan-1,5-diol, Hexan-1,6-diol, Neopentylglykol, Bis-(hydroxymethyl)cyclohexane, wie 1,4-Bis(hydroxymethyl)cyclohexan, Methylpentandiole, Dibutylenglykol und Polybutylenglykol in Betracht. Bevorzugt sind Alkohole der allgemeinen Formel HO-(CH₂)ₓ-OH, wobei x eine Zahl von 4 bis 20, bevorzugt eine gerade Zahl von 4 bis 20, ist. Besonders bevorzugt ist im Rahmen der vorliegenden Erfindung Polypropylenglykol als Oxyalkyleneinheit OX¹ und das Polymerisationsprodukt von Tetrahydrofuran als Oxyalkyleneinheit OX².

Wenn als Oxyalkyleneinheiten OX¹ und OX² polymere Verbindungen eingesetzt werden, so hat sich im Rahmen einer bevorzugten Ausführungsform der vorliegenden Erfindung bewährt, wenn Verbindungen, die zum Aufbau der Oxyalkyleneinheit OX¹ beitragen ein höheres Molekulargewicht aufweisen, als Verbindungen, die zum Aufbau der Oxyalkyleneinheit OX² beitragen. Besonders vorteilhaft ist es im Rahmen der vorliegenden Erfindung werden eine erfindungsgemäße Zusammensetzung ein Polymeres mit Oxyalkyleneinheiten OX¹ und OX² oder ein Gemisch aus zwei oder mehr Polymeren mit Oxyalkyleneinheiten OX¹ und OX² enthält, wobei die Zahlenmittel der Molekulargewichte (M_{w}) der Oxyalkyleneinheiten OX¹ und OX² ein Verhältnis von etwa 1,2:1 bis etwa 40:1, beispielsweise etwa 1,3:1 bis etwa 30: 1 oder etwa 1,5:1 bis etwa 20:1 oder etwa 1,8:1 bis etwa 15:1 oder etwa 2:1 bis etwa 12:1 oder etwas 3:1 bis etwa 10:1 oder etwa 4:1 bis etwa 9:1 oder etwa 5:1 bis etwa 8:1 oder etwa 6:1 bis etwa 7:1 aufweisen. Die Bestimmung der Molekulargewichte erfolgt durch dem Fachmann bekannten Methoden, beispielsweise durch Viskositätsmessung, Lichtstreuung, Membranosmometrie oder Gelpermeationschromatographie (GPC) in einer dem Fachmann bekannten Weise.

Weiterhin hat sich im Rahmen einer bevorzugten Ausführungsform der vorliegenden Erfindung bewährt, wenn Verbindungen, die zum Aufbau der Oxyalkyleneinheit OX¹ beitragen ein Molekulargewicht von etwa 1000 bis etwa 100.000 aufweisen, während Verbindungen, die zum Aufbau der Oxyalkyleneinheit OX² beitragen, ein Molekulargewicht von etwa 200 bis etwa 50.000 aufweisen. Besonders vorteilhaft ist es im Rahmen der vorliegenden Erfindung wenn eine erfindungsgemäße Zusammensetzung ein Polymeres mit Oxyalkyleneinheiten OX¹ und OX² oder ein Gemisch aus zwei oder mehr Polymeren mit Oxyalkyleneinheiten OX¹ und OX² enthält, wobei die Zahlenmittel der Molekulargewichte (M_{w}) der Oxyalkyleneinheiten OX¹ etwa 2000 bis etwa 40.000, beispielsweise etwa 3000 bis etwa 30.000 oder etwa 4000 bis etwa 25.000 oder etwa 5000 bis etwa 20.000 oder etwa 6000 bis etwa 19.000 oder etwa 7000 bis etwa 18.000 oder etwa 8000 bis etwa 15.000 oder etwa 9000 bis etwa 12.000 aufweisen und die Zahlenmittel der Molekulargewichte (M_{w}) der Oxyalkyleneinheiten OX² etwa 200 bis etwa 30.000, beispielsweise etwa 500 bis etwa 10.000 oder etwa 600 bis etwa 7.000 oder etwa 700 bis etwa 5000 oder etwa 800 bis etwa 4000 oder etwa 900 bis etwa 3500 oder etwa 1000 bis etwa 3000 aufweisen. Die Bestimmung der Molekulargewichte erfolgt wiederum durch dem Fachmann bekannten Methoden, beispielsweise durch Viskositätsmessung, Lichtstreuung, Membranosmometrie oder Gelpermeationschromatographie (GPC) in einer dem Fachmann bekannten Weise.

Nach einer bevorzugten Ausführungsform der vorliegenden Erfindung weisen die Verbindungen, die zum Aufbau der Oxyalkyleneinheit OX¹ beitragen ein Molekulargewicht von 7000 bis 100.000 auf, besonders bevorzugt von 10.000 bis 100.000, ganz besonders bevorzugt von 20.000 bis 100.000. Diese Molekulargewichte sind besonders vorteilhaft, da die damit hergestellten Polymere eine deutlich höhere Elastizität bei gleichzeitiger hoher Festigkeit besitzen. Ein weitere Vorteil ist darin zu sehen, dass es durch die Auswahl von solchen Verbindungen, mit einer höheren Kettenlänge zur Ausbildung einer geringeren Anzahl wasserstoffbrückenbildender Urethan-Einheiten kommt, wodurch die entsprechenden Polymere eine geringere Viskosität besitzen. Ferner hat sich herausgestellt, dass bei Einsatz der oben beschriebenen längerkettigen Verbindungen mit Molmassen von mehr als 7000, insbesondere von mehr als 10.000, vor allem von mehr als 20.000 der Gehalt an Silan-Endgruppen gering gehalten werden kann. Damit weisen die Polymere trotz der oben beschriebenen geringeren Viskosität höhere Molmassen auf, die Vernetzungsgrade sind geringer und damit verbessern sich die mechanischen Eigenschaften der Polymere, wie z.B. die Elastizität bzw. Dehnbarkeit bei einem gleichzeitig hohen Maß an Festigkeit. Darüber hinaus lassen sich bei Einsatz solcher längerkettigen Verbindungen teilweise bessere Frühfestigkeiten erzielen, da bei der Polymerisation wesentlich schneller ein hohes Molgewicht aufgebaut wird.

Ein weiterer Vorteil, der sich aus einer geringeren Anzahl an Silangruppen ergibt ist eine teilweise bessere Aushärtung, da wegen der geringeren Silangruppendichte weniger Wasser für die Aushärtung benötigt wird.

Die erfindungsgemäße Zusammensetzung weist, sofern als Isocyanat in Komponente A ein Silylgruppen tragendes Isocyanat eingesetzt wurde, Polymere mit Silylgruppen auf. Es ist jedoch erfindungsgemäß auch möglich erfindungsgemäße Silylgruppen tragende Polymere zu erhalten, wenn ein oben beschriebenes Isocyanatgruppen tragendes polymeres Umsetzungsprodukt, beispielsweise ein Umsetzungsprodukt der Komponenten A und B, oder ein Umsetzungsprodukt der Komponenten A, C und D, mit einem Silylgruppen tragenden Amin umgesetzt wird. Ein entsprechendes Verfahren und geeignete Silylgruppen tragende Amine werden im Rahmen des vorliegenden Textes unten näher erläutert.

Im Rahmen einer bevorzugten Ausführungsform der vorliegenden Erfindung werden zur Herstellung der erfindungsgemäßen Zusammensetzungen Isocyanatgruppen tragende Präpolymere mit Silylgruppen tragenden Aminen zu den erfindungsgemäßen Zusammensetzungen umgesetzt.

Die erfindungsgemäßen Zusammensetzung lassen sich grundsätzlich nach beliebigen, dem Fachmann bekannten Verfahren herstellen. Es hat sich jedoch gezeigt, dass die nachfolgend beschriebenen Verfahren sich besonders gut zur Herstellung der erfindungsgemäßen Zusammensetzungen eignen.

Gegenstand der vorliegenden Erfindung ist daher auch ein Verfahren zur Herstellung einer vernetzbaren polymeren Zusammensetzung, bei dem
a) mindestens ein Polymeres, dessen Polymerrückgrat mindestens zwei unterschiedliche Oxyalkyleneinheiten OX¹ und OX² enthält, wobei mindestens eine erste Oxyalkyleneinheit OX¹ mindestens zwei C-Atome zwischen zwei benachbarten Sauerstoffatomen aufweist und mindestens eine zweite Oxyalkyleneinheit OX² mindestens ein C-Atom mehr zwischen zwei benachbarten Sauerstoffatomen aufweist als die erste Oxyalkyleneinheit OX¹ mit einer unter geeigneten Bedingungen zur Vernetzung führenden Zahl an miteinander oder mit einem geeigneten Vernetzer reaktiven funktionellen Gruppen versehen wird, oder
b) mindestens ein erstes Polymeres, dessen Polymerrückgrat mindestens eine erste Oxyalkyleneinheit OX¹ aufweist, die mindestens zwei C-Atome zwischen zwei benachbarten Sauerstoffatomen aufweist und mindestens ein zweites Polymeres, dessen Polymerrückgrat mindestens eine zweite Oxyalkyleneinheit OX² enthält, die mindestens ein C-Atom mehr zwischen zwei benachbarten Sauerstoffatomen aufweist als die erste Oxyalkyleneinheit OX¹ im ersten Polymeren getrennt voneinander mit einer unter geeigneten Bedingungen zur Vernetzung führenden Zahl an miteinander oder mit einem geeigneten Vernetzer reaktiven funktionellen Gruppen, versehen und anschließend vermischt werden,
wobei das Gewichtsverhältnis von ersten Oxyalkyleneinheiten OX¹ zu zweiten Oxyalkyleneinheiten OX² 10:90 bis 90:10 beträgt.

Weiterhin betrifft die vorliegende Erfindung ein Verfahren zur Herstellung einer vernetzbaren polymeren Zusammensetzung, bei dem mindestens zwei Komponenten A und B miteinander umgesetzt werden, wobei
a) als Komponente A ein Isocyanat oder ein Polyisocyanat oder ein Gemisch aus zwei oder mehr Isocyanaten oder zwei oder mehr Polyisocyanaten oder einem Isocyanat und einem Polyisocyanat oder ein Gemisch aus zwei oder mehr Isocyanaten mit zwei oder mehr Polyisocyanaten und
b) als Komponente B ein Gemisch aus zwei oder mehr Polyolen eingesetzt wird, wobei Komponente B mindestens zwei Polyole mit Oxyalkyleneinheiten OX¹
c) und OX² enthält, wobei OX² mindestens ein C-Atom mehr zwischen zwei benachbarten Sauerstoffatomen aufweist als OX¹ und das Mischungsverhältnis der beiden Polyole mit Oxyalkyleneinheiten OX¹ und OX² 10:90 bis 90:10, bezogen auf das Gewicht, beträgt
und das Verhältnis der Komponenten A und B so gewählt wird, dass die Zusammensetzung eine unter geeigneten Bedingungen zur Vernetzung führende Zahl an miteinander oder mit einem geeigneten Vernetzer reaktiven funktionellen Gruppen aufweist.

Wie bereits im Rahmen des vorliegenden Textes oben erläutert, kann bei den erfindungsgemäßen Verfahren als Isocyanat ein mindestens eine Silylgruppe tragendes Isocyanat eingesetzt werden.

Ebenfalls Gegenstand der vorliegenden Erfindung ist ein Verfahren zur Herstellung einer vernetzbaren polymeren Zusammensetzung, bei dem mindestens drei Komponenten A, C und D miteinander umgesetzt werden, wobei
a) als Komponente A ein Isocyanat oder ein Polyisocyanat oder ein Gemisch aus zwei oder mehr Isocyanaten oder zwei oder mehr Polyisocyanaten oder einem Isocyanat und einem Polyisocyanat oder ein Gemisch aus zwei oder mehr Isocyanaten mit zwei oder mehr Polyisocyanaten und
b) als Komponente C ein Polyol mit Oxyalkyleneinheiten OX¹ und
c) als Komponente D ein Polyol mit Oxyalkyleneinheiten OX² eingesetzt wird,
wobei die Umsetzung in zwei oder mehr Schritten abläuft und in einem ersten Schritt Komponente A ganz oder teilweise mit der gesamten Komponente C oder einem Teil der Komponente C oder mit der gesamten Komponente D oder einem Teil der Komponente D umgesetzt wird und in einem zweiten Schritt das Reaktionsprodukt je nach Endgruppen und Reaktionsführung im ersten Schritt mit der gesamten verbleibenden Komponente A oder einem Teil der verbleibenden Komponente A oder mit der gesamten verbleibenden Komponente C oder einem Teil der verbleibenden Komponente C oder mit der gesamten verbleibenden Komponente D oder einem Teil der verbleibenden Komponente D umgesetzt wird und, je nach Reaktionsführung im ersten oder zweiten Schritt anschließend in einem oder mehreren weiteren Schritten die verbleibenden Komponenten A, C und D bis zum Verbrauch der Edukte mit dem Reaktionsprodukt der jeweils vorangehenden Stufe umgesetzt werden, wobei OX² mindestens ein C-Atom mehr zwischen zwei benachbarten Sauerstoffatomen aufweist als OX¹ und das Mischungsverhältnis der beiden Polyole mit Oxyalkyleneinheiten OX¹ und OX² im vernetzbaren Polymeren 10:90 bis 90:10, bezogen auf das Gewicht, beträgt und das Verhältnis der Komponenten A, C und D so gewählt wird, dass die Zusammensetzung eine unter geeigneten Bedingungen zur Vernetzung führende Zahl an miteinander oder mit einem geeigneten Vernetzer reaktiven funktionellen Gruppen aufweist.

Auch bei dem letztgenannten Verfahren kann als Isocyanat ein mindestens eine Silylgruppe tragendes Isocyanat eingesetzt werden.

Ein im Rahmen eines erfindungsgemäßen Verfahrens oder im Rahmen eines im obigen Text beschriebenen Verfahrens hergestelltes Polymeres, wie es in den erfindungsgemäßen Zusammensetzungen als Bestandteil dieser Zusammensetzungen vorliegt, weist eine zur Vernetzung der in der Zusammensetzung enthaltenen vernetzbaren Polymeren geeignete Art und Zahl an funktionellen Gruppen auf. Geeignete funktionelle Gruppen wurden ebenfalls bereits im Rahmen des vorliegenden Textes beschrieben. Es hat sich als bevorzugt herausgestellt, werden eine erfindungsgemäße Zusammensetzung Polymere enthält, die als vernetzbare funktionelle Gruppen entweder Isocyanatgruppen oder Silylgruppen gemäß der obengenannten Definition, enthalten. Die Herstellung entsprechender Isocyanatgruppen tragende Polymere erschließt sich aus den im Rahmen des vorliegenden Textes beschriebenen Verfahren für den Fachmann in umfangreicher Weise. Auch die Herstellung von Polymeren, die eine oder mehrere Silylgruppen tragen wurde bereits im Rahmen des vorliegenden Textes beschrieben. Es ist jedoch darüber hinaus möglich, Silylgruppen tragende Polymere herzustellen, indem Isocyanatgruppen tragende Polymere gemäß der Definition des vorliegenden Textes mit entsprechenden Silylgruppen tragenden Aminen umgesetzt werden.

Die vorliegende Erfindung umfasst daher auch Zusammensetzungen, die dadurch hergestellt werden, dass einen im Rahmen des vorliegenden Textes beschriebenes Isocyanatgruppen aufweisendes Reaktionsprodukt mit mindestens einem mindestens eine Silylgruppe tragenden Amin umgesetzt wird.

Geeignete Polyurethane mit entsprechenden Silylgruppen lassen sich beispielsweise leicht durch Umsetzung von entsprechenden Präpolymeren mit vorzugsweise zwei oder mehr Isocyanatgruppen mit Silanen der allgemeinen Formel II 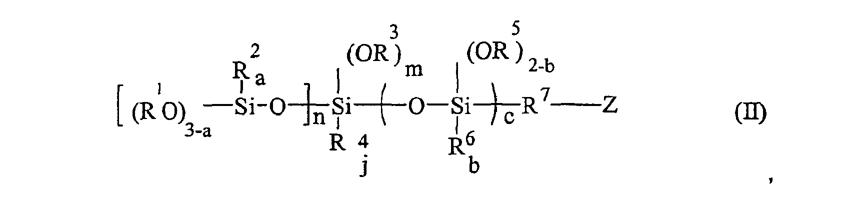 worin die Reste R¹ bis R⁶ jeweils unabhängig voneinander für einen linearen oder verzweigten, gesättigten oder ungesättigten Kohlenwasserstoffrest mit 1 bis etwa 24 C-Atomen, einen gesättigten oder ungesättigten Cycloalkylrest mit 4 bis etwa 24 C-Atomen oder einen Arylrest mit 6 bis etwa 24 C-Atomen stehen, R⁷ für einen gegebenenfalls substituierten Alkylenrest mit 1 bis etwa 44 C-Atomen, einen gegebenenfalls substituierten Cycloalkenylrest mit 6 bis etwa 24 C-Atomen oder einen gegebenenfalls substituierten Arylenrest mit 6 bis etwa 24 C-Atomen steht, Z für OH, NH₂, NHR⁸, SH, COOH oder NCO steht, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht und R⁸ für einen linearen oder verzweigten C₁₋₂₄-Alkylrest, Cyclohexyl-, Phenyl-, Tolyl-, Mesityl-, Trityl-, 2,4,6-Tri-tert-butylphenylrest steht, erhalten.

Grundsätzlich eignen sich beliebige Verbindungen der allgemeinen Formel II zur Herstellung erfindungsgemäß geeigneter Polyurethane. Beispielsweise sind dies: N-(α-Methyldimethoxysilylmethyl)amin, N-(α-Trimethoxysilylmethyl)amin, N-(α-Diethyl methoxysilylmethyl)amin, N-(α-Ethyldimethoxysilylmethyl)amin, N-(α-Methyldiethoxysilylmethyl)amin, N-(α-Triethoxysilylmethyl)amin, N-(α-Ethyldiethoxysilylmethyl)amin, N-(β-Methyldimethoxysilylethyl)amin, N-(β-Trimethoxysilylethyl)amin, N-(β-Ethyldimethoxysilylethyl)amin, N-(β-Methyldiethoxysilylethyl)amin, N-(β-Triethoxysilylethyl)amin, N-(β-Ethyldiethoxysilylethyl)amin, N-(γ-Methyldimethoxysilylpropyl)amin, N-(γ-Trimethoxysilylpropyl)amin, N-(γ-Ethyldimethoxysilylpropyl)amin, N-(γ-Methyldiethoxysilylpropyl)amin, N-(γ-Triethoxysilylpropyl)amin, N-(γ-Ethyldiethoxysilylpropyl)amin, N-(4-Methyldimethoxysilylbutyl)amin, N-(4-Trimethoxysilylbutyl)amin, N-(4-Diethylmethoxysilylbutyl)amin, N-(4-Ethyldimethoxysilylbutyl)amin, N-(4-Methyldiethoxysilylbutyl)amin, N-(4-Triethoxysilylbutyl)amin, N-(4-Diethylethoxysilylbutyl)amin, N-(4-Ethyldiethoxysilylbutyl)amin, N-(5-Methyldimethoxysilylpentyl)amin, N-(5-Trimethoxysilylpentyl)amin, N-(5-Triethylsilylpentyl)amin, N-(5-Ethyldimethoxysilylpentyl)amin, N-(5-Methyldiethoxysilylpentyl)amin, N-(5-Triethoxysilylpentyl)amin, N-(5-Diethylethoxysilylpentyl)amin, N-(5-Ethyldiethoxysilylpentyl)amin, N-(6-Methyldimethoxysilylhexyl)amin, N-(6-Trimethoxysilylhexyl)amin, N-(6-Ethyldimethoxysilylhexyl)amin, N-(6-Methyldiethoxysilylhexyl)amin, N-(6-Triethoxysilylhexyl)amin, N-(6-Ethyldiethoxysilylhexyl)amin, N-[γ-tris-(Trimethoxysiloxy)silylpropyl]amin, N-[γ-tris(Trimethoxysiloxy)silylpropyl]amin, N-(γ-Trimethoxysiloxydimethylsilylpropyl)amin, N-(γ-Trimethylsiloxydimethoxysilylpropyl)amin, N-(γ-Triethoxysiloxydiethylpropyl)amin, N-(γ-Triethoxysiloxydiethoxysilylpropyl)amin, N,N-Butyl-(γ-Trimethoxysilylpropyl)amin, N,N-Butyl-(γ-Triethoxysilylpropyl)amin, N,N-Phenyl-(γ-trimethoxysilylpropyl)amin, N,N-Phenyl-(γ-Triethoxysilylpropyl)amin, N,N-Cyclohexyl-(γ-Trimethoxysilylpropyl)amin, N,N-Ethyl-(γ-Trimethoxysilylpropyl)amin, Diethyl-N-(Trimethoxysilylpropyl)aspartat, Diethyl-N-(Triethoxysilylpropyl)aspartat N,N-Ethyl-(γ-Dimethoxymethylsilylpropyl)amin, N,N-Ethyl-(γ-Trimethoxysilylisobutyl)-amin, N,N-Bis-(trimethoxypropyl)-amin, N,N-Ethyl-(γ-Trimethoxysilylisobutyl)amin, N,N-Ethyl-(α-Trimethoxysilylmethyl)-amin, Dibutyl-N-(trimethoxysilylpropyl)aspartat, Dibutyl-N-(Triethoxysilylpropyl)aspartat, N,N-(β-Aminopropyl)-(γ-Trimethoxy-silylpropyl)amin, N,N'-Di-(Trimethoxysilylpropyl)ethylendiamin, Tetra-(Trimethoxysilylpropyl)ethylendiamin und N,N-Ethyl-(β-trimethoxysilylethyl)amin oder N-[γ-tris(Trimethylsiloxy)silylpropyl]amin oder N,N-Cyclohexyl-□-triethoxysilylmethylamin oder N,N-Cyclohexyl-□-methyldiethoxysilylmethylamin oder N,N-Phenyl-□-trimethoxysilylmethylamin oder N,N-Phenyl-□-methyldimethoxysilylmethylamin oder Gemische aus zwei oder mehr davon.

Die im Rahmen der vorliegenden Erfindung beschriebenen, gegebenenfalls Silylgruppen tragenden Polyurethane werden unter Verknüpfung von Verbindungen mit zwei oder mehr Isocyanatgruppen mit Verbindungen mit einer entsprechenden Anzahl an funktionellen Gruppen, die mindestens ein aktives Wasserstoffatomen aufweisen, hergestellt. Üblicherweise wird eine derartige Umsetzung, insbesondere dann, wenn als Reaktionspartner ein Polyol oder ein Gemisch aus zwei oder mehr Polyolen eingesetzt wird, unter Verwendung eines Katalysators durchgeführt.

Zu den üblicherweise im Rahmen einer solchen Polyurethanherstellung eingesetzten Katalysatoren zählen beispielsweise stark basische Amide wie 2,3-Dimethyl-3,4,5,6-tetrahydropyrimidin, Tris-(dialkylaminoalkyl)-s-hexahydrotriazine, z. B. Tris-(N,N-dimethylaminopropyl)-s-hexahydrotriazin oder die üblichen tertiären Amine, z. B. Triethylamin, Tributylamin, Dimethylbenzylamin, N-Ethyl-, N-Methyl-, N-Cyclohexylmorpholin, Dimethylcyclohexylamin, Dimorpholinodiethylether, 2-(Dimethylaminoethoxy)-ethanol, 1,4-Diazabicyclo[2,2,2]octan, 1-Azabicyclo[3,3,0]octan, N,N,N',N'-Tetramethylethylendiamin, N,N,N`,N`-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol, Di-(4-N,N-dimethylaminocyclohexyl)-methan und dergleichen, sowie organische Metallverbindungen wie Titansäureester, Eisenverbindungen wie z. B. Eisen-(III)-acetylacetonat, Zinnverbindungen, z. B. Zinn-(II)-Salze von organischen Carbonsäuren, beispielsweise Zinn-(II)-diacetat, das Zinn-(II)-Salz der 2-Ethylhexansäure (Zinn-(II)-octoat), Zinn-(II)-dilaurat oder die Dialkylzinn-(IV)-Salze von organischen Carbonsäuren, wie z. B. Dibutylzinn-(IV)-diacetat, Dibutylzinn-(IV)-dilaurat, Dibutylzinn-(IV)-maleat oder Dioctylzinn-(IV)-diacetat oder dergleichen, sowie Dibutylzinn-(IV)-dimercaptid oder Gemische aus zwei oder mehr der genannten Katalysatoren sowie synergistisch wirkende Kombinationen aus stark basischen Aminen und organischen Metallverbindungen eingesetzt werden. Die Katalysatoren können in üblichen Mengen, beispielsweise etwa 0,002 bis etwa 5 Gew.-%, bezogen auf die Polyalkohole, verwendet werden.

Die vorliegende Erfindung betrifft auch erfindungsgemäße vernetzbare Zubereitungen, die ein geeignetes Polymeres, oder ein Gemisch aus zwei oder mehr geeigneten Polymeren, wie es im Rahmen des vorliegenden Textes beschrieben wurde, und mindestens einen weiteren Zusatzstoff enthalten.

Eine erfindungsgemäße Zubereitung enthält daher das erfindungsgemäße silanisierte Polyurethan oder mehrere voneinander verschiedene Polyurethane dieser Art und beispielsweise eine oder mehrere Verbindungen, ausgewählt aus der Gruppe, bestehend aus Weichmachern, Reaktivverdünnern., Antioxidantien, Härtern, Füllstoffen, Tackifiern, Trockenmitteln, Wasserfängern und UV-Stabilisatoren.

Das erfindungsgemäße Silylgruppen tragende Polyurethan kann bereits in der bislang beschriebenen Form im Rahmen der erfindungsgemäßen Einsatzvorschläge zu seinem endgültigen Einsatz kommen. In der Regel ist es jedoch vorteilhaft, wenn das erfindungsgemäße Polyurethan in einer Zubereitung zum Einsatz kommt, die weitere Verbindungen, beispielsweise zur Regulierung der Viskosität oder der Materialeigenschaften, enthält.

Es ist beispielsweise möglich, dass die Viskosität des erfindungsgemäßen Polyurethans für bestimmte Anwendungen zu hoch ist. Es wurde jedoch gefunden, dass sich die Viskosität des erfindungsgemäßen Polyurethans in der Regel durch Verwendung eines "Reaktivverdünners" auf einfache und zweckmäßige Weise verringern lässt, ohne dass die Materialeigenschaften des ausgehärteten Polyurethans wesentlich darunter leiden.

Als Reaktivverdünner eignet sich beispielsweise ein zweites Polyurethan mit mindestens einer gegenüber Wasser reaktiven Endgruppe, insbesondere einer NCO-Gruppe oder einer Alkoxysilangruppe, oder beidem, dessen Molekulargewicht (Mₙ höchstens 10.000 beträgt und um mindestens 3.000 vorzugsweise mindestens 5.000 geringer ist als das Molekulargewicht des ersten Polyurethans, als Reaktivverdünner.

Vorzugsweise weist der Reaktivverdünner mindestens eine funktionelle Gruppe auf, die unter Feuchtigkeitseinfluss in der Lage ist mit einer reaktiven Gruppe des ersten, erfindungsgemäßen Polyurethans unter Kettenverlängerung bzw. Vernetzung zu reagieren (Reaktiwerdünner). Bei der mindestens einen funktionellen Gruppe kann es sich um jede unter Feuchtigkeitseinfluss mit Vernetzung oder Kettenverlängerung reagierende funktionelle Gruppe handeln.

Als Reaktivverdünner eignen sich alle polymeren Verbindungen, die mit dem ersten, erfindungsgemäßen Polyurethan unter Verringerung der Viskosität mischbar sind und die Materialeigenschaften des nach Aushärtung oder Vernetzung entstehenden Produkts weitgehend unbeeinflusst lassen, oder zumindest nicht so nachteilig beeinflussen, dass die Unbrauchbarkeit des Produkts daraus resultiert. Geeignet sind beispielsweise Polyester, Polyether, Polymerisate von Verbindungen mit olefinisch ungesättigter Doppelbindung oder Polyurethane, sofern die oben genannten Voraussetzungen erfüllt werden.

Vorzugsweise handelt es sich bei den Reaktivverdünnern jedoch um Polyurethane mit wenigstens einer Alkoxysilangruppe als reaktive Gruppe.

Die Reaktivverdünner können ein oder mehrere funktionelle Gruppen aufweisen, bevorzugt liegt die Zahl der funktionellen Gruppen jedoch bei 1 bis etwa 6, insbesondere bei etwa 2 bis etwa 4, beispielsweise etwa 3.
Die Viskosität der Reaktivverdünner beträgt in einer bevorzugten Ausführungsform weniger als etwa 20.000 mPas, insbesondere etwa 1.000 bis etwa 10.000, beispielsweise etwa 3.000 bis etwa 6.000 mPas (Brookfield RVT, 23°C, Spindel 7, 2,5 U/min).

Die im Rahmen des erfindungsgemäßen Verfahrens einsetzbaren Reaktivverdünner können eine beliebige Molekulargewichtsverteilung (PD) aufweisen, und sind demnach nach den üblichen Methoden der Polymerchemie herstellbar.

Vorzugsweise werden als Reaktivverdünner Polyurethane eingesetzt, die aus einer Polyolkomponente und einer Isocyanatkomponente und anschließender Funktionalisierung mit einer oder mehreren Alkoxysilylgruppen hergestellt werden können.

Der Begriff "Polyolkomponente" umfasst dabei im Rahmen des vorliegenden Textes ein einzelnes Polyol oder ein Gemisch von zwei oder mehr Polyolen, die zur Herstellung von Polyurethanen herangezogen werden können. Unter einem Polyol wird ein polyfunktioneller Alkohol verstanden, d.h., eine Verbindung mit mehr als einer OH-Gruppe im Molekül, wie sie bereits im Rahmen des vorliegenden Textes als Bestandteil bei der Herstellung der Komponente A beschrieben wurde.

Als Polyolkomponente zur Herstellung der Reaktivverdünner kann eine Vielzahl von Polyolen eingesetzt werden. Beispielsweise sind dies aliphatische Alkohole mit 2 bis 4 OH-Gruppen pro Molekül. Die OH-Gruppen können sowohl primär als auch sekundär sein. Zu den geeigneten aliphatischen Alkoholen zählen beispielsweise Ethylenglykol, Propylenglykol und dergleichen polyfunktionelle Alkohole wie sie bereits im Rahmen des vorliegenden Textes genannt wurden.

Ebenfalls zum Einsatz als Polyolkomponente geeignet sind Polyether, die durch Vinylpolymere modifiziert wurden. Derartige Produkte sind beispielsweise erhältlich, indem Styrol- und/oder Acrylnitril in der Gegenwart von Polyethern polymerisiert werden.

Ebenfalls als Polyolkomponente für die Herstellung des Reaktivverdünners geeignet, sind Polyesterpolyole mit einem Molekulargewicht von etwa 200 bis etwa 5.000. So können beispielsweise Polyesterpolyole verwendet werden, die durch die bereits oben beschriebene Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind, wie bereits genannt, 1,4-Hydroxymethylcyclohexan, 2-Methyl-1,3-propandiol, Butandiol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind, wie bereits oben beschrieben, durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren und Tricarbonsäuren sowie geeignete Alkohole wurden bereits oben genannt.

Im Rahmen der vorliegenden Erfindung besonders bevorzugt als Polyolkomponente zur Herstellung der Reaktivverdünner eingesetzte Polyole sind beispielsweise Dipropylenglykol und/oder Polypropylenglykol mit einem Molekulargewicht von etwa 400 bis etwa 2500, sowie Polyesterpolyole, bevorzugt Polyesterpolyole erhältlich durch Polykondensation von Hexandiol, Ethylenglykol, Diethylenglykol oder Neopentylglykol oder Gemischen aus zwei oder mehr davon und Isophthalsäure oder Adipinsäure, oder deren Gemische.

Ebenfalls als Polyolkomponente zur Herstellung der Reaktivverdünner geeignet sind Polyacetale. Unter Polyacetalen werden Verbindungen verstanden, wie sie aus Glykolen, beispielsweise Diethylenglykol oder Hexandiol mit Formaldehyd erhältlich sind. Im Rahmen der Erfindung einsetzbare Polyacetale können ebenfalls durch die Polymerisation cyclischer Acetale erhalten werden.

Weiterhin als Polyole zur Herstellung der Reaktivverdünner geeignet sind Polycarbonate. Polycarbonate können beispielsweise durch die Reaktion von Diolen wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Ebenfalls als Polyolkomponente zur Herstellung der Reaktivverdünner geeignet, sind OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropyhnethacrylat oder Gemische aus zwei oder mehr davon.

Zur Herstellung der erfindungsgemäß bevorzugten Reaktiwerdünner wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen, bevorzugt.

Zur Herstellung der Reaktivverdünner besonders geeignet sind die oben bereits genannten Polyisocyanate.

Vorzugsweise weist die im Rahmen der vorliegenden Erfindung als Reaktivverdünner vorliegende Verbindung mindestens eine Alkoxysilangruppe auf, wobei unter den Alkoxysilangruppen die Di- und Trialkoxysilangruppen bevorzugt sind.

Es kann unter bestimmten Anwendungsbedingungen vorteilhaft sein, wenn die funktionellen Gruppen des Reaktiwerdünners eine andere Reaktivität gegenüber Feuchtigkeit oder dem jeweils eingesetzten Härter aufweisen, als die funktionellen Gruppen des erfindungsgemäßen Silylgruppen tragenden Polyurethans mit dem höheren Molekulargewicht. So kann es beispielsweise erwünscht sein, dass der Reaktivverdünner langsamer reagiert als das erste Polyurethan, um einen möglichst schnellen Vernetzungseffekt der langkettigen Polymermoleküle zu erhalten. Wenn das erste Polyurethan eine oder mehrere Alkoxysilan-Endgruppen aufweist, so lässt sich die Reaktivität der Endgruppen des Reaktiwerdünners beispielsweise durch Verwendung anderer Alkoxygruppen als in den Endgruppen des erfindungsgemäßen Silylgruppen tragenden Polyurethans steuern.

Die erfindungsgemäße Zubereitung enthält das erfindungsgemäße Polyurethan oder ein Gemisch aus zwei oder mehr erfindungsgemäßen Polyurethanen und den Reaktivverdünner oder ein Gemisch aus zwei oder mehr Reaktivverdünnern in der Regel in einem solchen Verhältnis, dass die Zubereitung eine Viskosität von höchstens 300.000 mPas (Brookfield RVT, 23°C, Spindel 7, 2,5 U/min aufweist. Hierzu ist in der Regel ein Anteil an Reaktivverdünner (hierunter fällt auch ein Gemisch aus zwei oder mehr Reaktivverdünnern), bezogen auf die gesamte Zubereitung, von etwa 1 Gew.-% bis zu etwa 70 Gew.-%, insbesondere von etwa 5 Gew.-% bis etwa 25 Gew.-% geeignet.

Zur Reduzierung der Viskosität der erfindungsgemäßen Polyurethans lässt sich neben oder anstatt eines Reaktiwerdünners auch ein Weichmacher einsetzen.

Als "Weichmacher" werden im Rahmen der vorliegenden Erfindung Verbindungen bezeichnet, die gegenüber dem ersten Polyurethan inert sind und die Verringerung der Viskosität einer Zubereitung bewirken, die ein erfindungsgemäßes Polyurethan oder ein Gemisch aus zwei oder mehr erfindungsgemäßen Polyurethanen enthält.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Cognis, Düsseldorf). Außerdem geeignet sind weichmachende Alkylsulfonsäureester wie Phenylalkylsulfonsäureester.

Ebenfalls als Weichmacher geeignet sind die reinen oder gemischten Ether monofunktioneller, linearer oder verzweigter C4-16'Alkohole oder Gemische aus zwei oder mehr verschiedenen Ethern solcher Alkohole, beispielsweise Dioctylether (erhältlich als Cetiol OE, Fa. Cognis, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₁₀-alkylether, insbesondere die Dimethyl- oder Diethylether von Diethylenglykol oder Dipropylenglykol, sowie Gemische aus zwei oder mehr davon.

Ebenfalls im Rahmen der vorliegenden Erfindung als Weichmacher geeignet sind Diurethane. Diurethane lassen sich beispielsweise durch Umsetzung von Diolen mit OH-Endgruppen mit monofunktionellen Isocyanaten herstellen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Zur Herstellung der Diurethane auf Basis von Diolen können Diole mit 2 bis etwa 22 C-Atomen eingesetzt werden, beispielsweise Ethylenglykol, Propylenglykol, 1,2-Propandiol, Dibutandiol, Hexandiol, Octandiol oder technische Gemische von Hydroxyfettalkoholen mit etwa 14 C-Atomen, insbesondere Hydroxystearylalkohol. Bevorzugt werden lineare Diolmischungen, insbesondere solche, die Polypropylenglykol mit einem mittleren Molekulargewicht (Mₙ) von etwa 1.000 bis etwa 6.000 in Mengen über etwa 50 Gew.-%, insbesondere über etwa 70 Gew.-% enthalten. Ganz besonders bevorzugt werden Diurethane ausschließlich auf der Basis von Propylenglykol mit gleichen oder verschiedenen mittleren Molekulargewichten von etwa 1.000 bis etwa 4.000. Die freien OH-Gruppen der Diolmischungen werden im wesentlichen alle mit aromatischen oder aliphatischen Monoisocyanaten oder deren Gemischen abreagiert. Bevorzugte Monoisocyanate sind Phenylisocyanat oder Toluylenisocyanat oder deren Gemische.

Zur Herstellung der Diurethane auf Basis von Diisocyanaten werden aromatische oder aliphatische Diisocyanate oder deren Gemische eingesetzt. Als aromatische oder aliphatische Diisocyanate sind beispielsweise die Isocyanate geeignet, wie sie oben als zur Herstellung des erfindungsgemäßen Polyurethans geeignet angegeben wurden, vorzugsweise Toluylendiisocyanat (TDI). Die freien NCO-Gruppen der Diisocyanate werden im wesentlichen vollständig mit monofunktionellen Alkoholen, vorzugsweise linearen monofunktionellen Alkoholen oder Gemischen aus zwei oder mehr verschiedenen monofunktionellen Alkoholen umgesetzt. Besonders geeignet sind Gemische linearer monofunktioneller Alkohole. Geeignete Monoalkohole sind beispielsweise Monoalkohole mit 1 bis etwa 24 C-Atomen, beispielsweise Methanol, Ethanol, die Stellungsisomeren von Propanol, Butanol, Pentanol, Hexanol, Heptanol, Octanol, Decanol oder Dodecanol, insbesondere die jeweiligen 1-HydroxyVerbindungen, sowie Gemische aus zwei oder mehr davon. Ebenfalls geeignet sind sogenannte "technische Gemische" von Alkoholen und endgruppenverschlossene Polyalkylenglykolether. Besonders geeignet sind Alkoholgemische, die Polypropylenglykolmonoalkylether mit einem mittleren Molekulargewicht (Mₙ von etwa 200 bis etwa 2.000 in einer Menge von mehr als etwa 50 Gew.-%, vorzugsweise mehr als etwa 70 Gew.-%, bezogen auf die Alkoholmischung, enthalten. Besonders bevorzugt werden Diurethane auf Basis von Diisocyanaten, deren freie NCO-Gruppen vollständig mittels Polypropylenglykolmonoalkylether mit einem mittleren Molekulargewicht von etwa 500 bis etwa 2.000 umgesetzt worden sind.

Die erfindungsgemäße Zubereitung enthält die genannten Weichmacher in der Regel in einer solchen Menge, dass die Viskosität der Zubereitung höchstens etwa 300.000 mPas (Brookfield RVT, 23°C, Spindel 7, 2,5 U/min beträgt.
Unter Berücksichtigung der unterschiedlichen Polyurethane, die in der Zubereitung enthalten sein können, kann zum Erreichen der angegebenen Viskosität eine unterschiedliche Menge an Weichmacher erforderlich sein. In der Regel lässt sich die geforderte Viskosität jedoch beispielsweise durch Zugabe einer Menge von etwa 1 bis etwa 40 Gew.-% Weichmacher, bezogen auf die Zubereitung, erreichen. Eine Erhöhung der Weichmachermenge führt in der Regel zu einem weiteren Absinken der Viskosität.

Die erfindungsgemäße Zubereitung kann die Reaktivverdünner oder die Weichmacher jeweils einzeln, oder im Gemisch enthalten.

Neben Reaktiwerdünnem und Weichmachern kann die erfindungsgemäße Zubereitung noch weitere Zusatzstoffe enthalten, die in der Regel zur Modifikation bestimmter Materialeigenschaften der Zubereitung vor oder nach der Verarbeitung dienen oder die Stabilität der Zubereitung vor oder nach der Verarbeitung fördern.

Häufig ist es sinnvoll, die erfindungsgemäßen Zubereitungen weiter gegenüber eindringender Feuchtigkeit zu stabilisieren, um die Lagerbarkeit (shelf-life) noch weiter zu erhöhen.

Eine solche Verbesserung der Lagerbarkeit lässt sich beispielsweise durch den Einsatz von Feuchtigkeits-Stabilisatoren erreichen. Als Feuchtigkeits-Stabilisatoren eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muss die Reaktivität der Stabilisatoren gegenüber in die Zubereitung eingedrungener Feuchtigkeit höher sein, als die Reaktivität der Endgruppen des in der Zubereitung vorliegenden erfindungsgemäßen Polyurethans oder des Gemischs aus zwei oder mehr Polyurethanen.

Als Feuchtigkeits-Stabilisatoren eignen sich beispielsweise Isocyanate.

In einer bevorzugten Ausführungsform werden als Feuchtigkeits-Stabilisatoren jedoch Silane eingesetzt. Beispielsweise Vinylsilane wie 3-Vinylpropyltri-ethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1oder Benzamidosilane wie Bis(N-methylbenzamido)methylethoxysilan (CAS Nr. 16230-35-6) oder Carbamatosilane wie Carbamatomethyltrimethoxysilan.

Ebenfalls als Feuchtigkeits-Stabilisatoren geeignet sind die oben genannten Reaktivverdünner, sofern sie ein Molekulargewicht (Mₙ von weniger als etwa 5.000 aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemäßen Polyurethans.

Die Erfindungsgemäße Zubereitung enthält in der Regel etwa 0 bis etwa 6 Gew.-% Feuchtigkeits-Stabilisatoren.

Die erfindungsgemäße Zubereitung kann weiterhin bis zu etwa 7 Gew.-%, insbesondere etwa 3 bis etwa 5 Gew. % Antioxidantien enthalten.

Die erfindungsgemäße Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silangruppe trägt und beim Vernetzen bzw. Aushärten in das Endprodukt eingebaut wird. Hierzu besonders geeignet sind die Produkte Lowilite 75 und Lowilite 77 (Fa. Great Lakes, USA).

Eine erfindungsgemäße Zubereitung kann darüber hinaus von etwa 0 Gew.-% bis zu etwa 50 Gew.-% an Füllstoffen enthalten. Als Füllstoffe geeignet sind beispielsweise mit Silanen verträgliche anorganische Verbindungen wie Kreide, Kalkmehl, Kaolin, Talkum, Bariumsulfat, Glimmer, gefällte Kieselsäure, pyrogene Kieselsäure, Zeolithe, Bentonite, gemahlene Mineralstoffe, Glaskugeln, Glasmehl, Glashohlkugeln, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln. Gegebenenfalls können Füllstoffe eingesetzt werden, die der Zubereitung Thixotropie verleihen, beispielsweise quellbare Kunststoffe wie PVC, Polyamidpulver oder Polyamidwachse.

Der Anteil an Füllstoffen an der erfindungsgemäßen Zusammensetzung beträgt beispielsweise bis zu etwa 30 Gew.-% oder bis zu etwa 10 Gew.-% oder bis zu etwa 2 Gew.-%.

Eine erfindungsgemäße Zubereitung kann prinzipiell eine Viskosität innerhalb eines breiten Viskositätsbereichs aufweisen. Je nach Anwendung, kann die Viskosität beispielsweise innerhalb eines Bereich von etwa 500 bis etwa 600000 oder etwa 2000 bis etwa 400000 mPas (gemessen mit Brookfield RVT, 23 °C, Spindel 7, 2,5 Upm) liegen.

Gegenstand der Erfindung ist auch die Verwendung der erfindungsgemäßen Zusammensetzung als Klebstoff, Dichtmasse, Oberflächenbeschichtungsmittel, Spachtelmasse und zur Herstellung von Formteilen.

Ein weiteres Anwendungsgebiet der erfindungsgemäßen Zusammensetzungen ist die Verwendung als Dübel-, Loch- oder Rissspachtelmasse.

So ist beispielsweise der Klebstoff als Klebstoff für Kunststoffe, Metalle, Spiegel, Glas, Keramik, mineralische Untergründe, Holz, Leder, Textilien, Papier, Pappe und Gummi geeignet, wobei die Materialien jeweils mit sich selbst oder beliebig untereinander verklebt werden können.

Ferner ist die erfindungsgemäße Zusammensetzung als Oberflächenbeschichtungsmittel für Oberflächen aus Kunststoff, Metall, Glas, Keramik, mineralischen Materialien, Holz, Leder, Textilien, Papier, Pappe und Gummi geeignet.

Die vorgenannten Verwendungsmöglichkeiten sind nur beispielhaft und dienen nicht dazu, die Erfindung einzuschränken.

Die Erfindung wird nachfolgend anhand der Beispiele beschrieben, welche die Erfindung nicht einschränken.

### Beispiele:

### Beispiel 1:

282 g (15 mmol) Polypropylenglykol 18000 (OHZ=6,0) wurden in einem 500 ml Dreihalskolben bei 100°C im Vakuum getrocknet. Unter Stickstoffatmosphäre wurde bei 80°C 0,06 g Dibutylzinnlaurat hinzugegeben und anschließend mit 7,2 g (32 mmol) Isocyanatopropyltrimethoxysilan (%NCO=18,4) versetzt. Nach einstündigem Rühren bei 80°C wurde das entstandene Polymer abgekühlt und mit 6 g Vinyltrimethoxysilan versetzt. Das Produkt wurde feuchtigkeitsdicht unter Stickstoffatmosphäre in einem Glasgefäß gelagert.

### Beispiel 2:

260,5 g (88 mmol) PolyTHF 2900 (OHZ=38) wurden in einem 500 ml Dreihalskolben bei 100°C im Vakuum getrocknet. Unter Stickstoffatmosphäre wurde bei 80°C 0,06 g Dibutylzinnlaurat hinzugegeben und anschließend mit 7,8 g (44 mmol) TDI (%NCO=47,8) versetzt. Nach einstündigem Rühren bei 80°C wurde das entstandene Polymer mit 21,1 g (93 mmol) Isocyanatopropyltrimethoxysilan (%NCO=18,4) versetzt und eine weitere Stunde bei 80°C gerührt. Das Polymer wird abgekühlt und mit 6 g Vinyltrimethoxysilan versetzt. Das Produkt wurde feuchtigkeitsdicht unter Stickstoffatmosphäre in einem Glasgefäß gelagert.

### Beispiel 3:

Die Polymeren aus Beispiel 1 und Beispiel 2 wurden in verschiedenen Verhältnissen miteinander gemischt. Die Mischungen wurden mit 1 % N-Aminoethyl-3-aminopropyltrimethoxysilan und 0,2 % Dibutylzinnlaurat versetzt. Auf einer Glasplatte wurden 1 mm dicke Filme der Mischungen aufgetragen und die Hautbildungszeit (Skin over time / SOT) sowie die Zeit zur Bildung einer klebfreien Schicht (Tack free time / TFT) bestimmt. Die Filme wurden nach einwöchiger Lagerung zerrissen:

| | | | | | | | |
|---|---|---|---|---|---|---|---|
| Anteil Polymer 1 [%] | 100 | 90 | 80 | 70 | 60 | 50 | 0 |
| Anteil Polymer 2 [%] | 0 | 10 | 20 | 30 | 40 | 50 | 100 |
| SOT [Min.] | 10 | 9 | 10 | 10 | 9 | 8 | 7 |
| TFT [h] | 2 | 2 | 2 | 2 | 2 | 2 | 2,5 |
| Bruchkraft [N/mm ] | 0,63 | 0,87 | 1,03 | 1,19 | 1,35 | 1,54 | 1,28 |
| Bruchdehnung [%] | 57 | 65 | 73 | 78 | 82 | 85 | 35 |

### Beispiel 4:

Das Polymere aus Beispiel 2 wurde in verschiedenen Verhältnissen mit einem silanterminierten Polymer der Firma Kaneka (S203H) gemischt. Die Mischungen wurden mit 1% N-Aminoethyl-3-aminopropyltrimethoxysilan und 0,2 % Dibutylzinndiacetonat versetzt. Auf einer Glasplatte wurden 1 mm dicke Filme der Mischungen aufgetragen und die ausgehärteten Filme nach einwöchiger Lagerung zerrissen:

| | | | | |
|---|---|---|---|---|
| Anteil Polymer 2 [%] | 100 | 75 | 25 | 0 |
| Anteil Kaneka S203H [%] | 0 | 25 | 75 | 100 |
| Bruchkraft [N/mm²] | 1,61 | 1,97 | 0,55 | 0,34 |
| Bruchdehnung [%] | 37 | 110 | 286 | 251 |

### Beispiel 5:

Das Polymere aus Beispiel 2 wurde in verschiedenen Verhältnissen mit einem silanterminierten Polymer der Firma Kaneka (S303H) gemischt. Die Mischungen wurden mit 1% N-Aminoethyl-3-aminopropyltrimethoxysilan und 0,2 % Dibutylzinndiacetonat versetzt. Auf einer Glasplatte wurden 1 mm dicke Filme der Mischungen aufgetragen und die ausgehärteten Filme nach einwöchiger Lagerung zerrissen:

| | | | | |
|---|---|---|---|---|
| Anteil Polymer 2 [%] | 100 | 75 | 25 | 0 |
| Anteil Kaneka S303H [%] | 0 | 25 | 75 | 100 |
| Bruchkraft [N/mm²] | 1,61 | 1,82 | 1,11 | 0,47 |
| Bruchdehnung [%] | 37 | 98 | 214 | 134 |

### Beispiel 6:

117 g (6 mmol) Polypropylenglykol 18000 (OHZ=6,0) und 108 g (37 mmol) PolyTHF 2900 (OHZ=38) wurden in einem 500 ml Dreihalskolben bei 100°C im Vakuum getrocknet. Unter Stickstoffatmosphäre wird bei 80°C 0,06 g Dibutylzinnlaurat hinzugegeben und anschließend mit 3,0 g (17 mmol) TDI (%NCO=47,8) versetzt. Nach einstündigem Rühren bei 80°C wurde das entstandene Polymer mit 12,4 g (54 mmol) Isocyanatopropyltrimethoxysilan (%NCO=18,4) versetzt und eine weitere Stunde bei 80°C gerührt. Das Polymer wurde abgekühlt und mit 6 g Vinyltrimethoxysilan versetzt. Das Produkt wurde feuchtigkeitsdicht unter Stickstoffatmosphäre in einem Glasgefäß gelagert.

### Beispiel 7:

139,5 g (17 mmol) Polypropylenglykol 8000 (OHZ=14,0) und 114,2 g (116 mmol) PolyTHF 1000 (OHZ=114) wurden in einem 500 ml Dreihalskolben bei 100°C im Vakuum getrocknet. Unter Stickstoffatmosphäre wurden bei 80°C 0,06 g Dibutylzinnlaurat hinzugegeben und anschließend mit 16,4 g (93 mmol) TDI (%NCO=47,8) versetzt. Nach einstündigem Rühren bei 80°C wurde das entstandene Polymer mit 19,3 g (84 mmol) Isocyanatopropyltrimethoxysilan (%NCO=18,3) versetzt und eine weitere Stunde bei 80°C gerührt. Das Polymer wurde abgekühlt und mit 6 g Vinyltrimethoxysilan versetzt. Das Produkt wird feuchtigkeitsdicht unter Stickstoffatmosphäre in einem Glasgefäß gelagert.

### Beispiel 8:

139,5 g (17 mmol) Polypropylenglykol 8000 (OHZ=14,0) wurden in einem 500 ml Dreihalskolben bei 100°C im Vakuum getrocknet. Unter Stickstoffatmosphäre wurden bei 80°C 0,06 g Dibutylzinnlaurat hinzugegeben und anschließend mit 16,4 g (93 mmol) TDI (%NCO=47,8) versetzt. Nach einstündigem Rühren bei 80°C wurde das entstandene Polymer mit 114,2 g (116 mmol) PolyTHF 1000 (OHZ=114) versetzt und eine weitere Stunde bei 80°C gerührt. Es wurde mit 19,3 g (84 mmol) lsocyanatopropyltrimethoxysilan (%NCO=18,3) versetzt und eine weitere Stunde bei 80°C gerührt. Das Polymer wurde abgekühlt und mit 6 g Vinyltrimethoxysilan versetzt. Das Produkt wurde feuchtigkeitsdicht unter Stickstoffatmosphäre in einem Glasgefäß gelagert.

### Beispiel 9:

Die Eigenschaften der Polymere aus den Beispielen 6-8 wurden bestimmt und Klebstoffformulierungen hergestellt:

| | Polymer 6 | Polymer 7 | Polymer 8 |
|---|---|---|---|
| Polymerfilme*: | | | |
| Aussehen (nach 7 Tagen bei RT) | milchig-trübe | milchig-trübe | klar |
| Aussehen (nach 6 Wochen bei 40°C) | trübe / Phasen trennung | trübe / leichte Phasentrennung | klar / keine Phasentrennung |
| Aussehen (nach 6 Monaten bei RT) | fest / teilweise auskristallisiert | trübe / sehr hochviskos | klar / homogen / gut fließfähig |
| Bruchkraft* [N/mm²] | 1,0 | 0,9 | 1,1 |
| Bruchdehnung*[%] | 73 | 33 | 46 |

| Klebstoffformulierung**: | | | |
|---|---|---|---|
| Aussehen (Film)** | trübe | Opak | transparent |
| Bruchkraft (Film)** | 3,4 | 2,4 | 2,0 |
| Bruchdehnung (Film)** | 170 | 56 | 71 |
| Zugscherfestigkeit** Holz/Holz [N/mm²] | 4,3 | 5,1 | 5,2 |
| Zugscherfestigkeit** Holz/PVC [N/mM²] | 4,0 | 4,6 | 4,5 |
| Zugscherfestigkeit** Holz/Alu [N/mM²] | 2,4 | 2,1 | 1,9 |
| Zugscherfestigkeit** Holz/Messing [N/mM²] | n.b. | 5,1 | 2,3 |
| Zugscherfestigkeit** Holz/Glas [N/mM²] | n.b. | 2,5 | 3,0 |

| | | | |
|---|---|---|---|
| * Filme hergestellt mit 1 % N-Aminoethyl-3-aminopropyltrimethoxysilan und 0,2%Dibutylzinnlaurat ** Filme und Holzverklebungen hergestellt aus Klebstoffformulierung mit 8% Aerosil R 8200, 1 % NAminoethyl-3-aminopropyltrimethoxysilan und 0,2 % Dibutylzinnlaurat | | | |

### Beispiel 10:

155,1 g (19 mmol) Polypropylenglykol 8000 (OHZ=14,0) wurden in einem 500 ml Dreihalskolben bei 100°C im Vakuum getrocknet. Unter Stickstoffatmosphäre wurde bei 80°C 0,06 g Dibutylzinnlaurat hinzugegeben und anschließend mit 15,3 g (87 mmol) TDI (%NCO=47,8) versetzt. Nach einstündigem Rühren bei 80°C wurde das entstandene Polymer mit 103,4 g (105 mmol) PolyTHF 1000 (OHZ=114) versetzt und eine weitere Stunde bei 80°C gerührt. Es wurde mit einer Mischung aus 10,2 g (45 mmol) Isocyanatopropyltrimethoxysilan (%NCO=18,3) und 5,5 g (34 mmol) Isocyanatomethyldimethoxymethylsilan (%NCO=25,7) versetzt und eine weitere Stunde bei 80°C gerührt. Das Polymere wurde abgekühlt und mit 6 g Vinyltrimethoxysilan versetzt. Das Produkt wurde feuchtigkeitsdicht unter Stickstoffatmosphäre in einem Glasgefäß gelagert.

### Beispiel 11:

171,2 g (21 mmol) Polypropylenglykol 8000 (OHZ=14,0) wurden in einem 500 ml Dreihalskolben bei 100°C im Vakuum getrocknet. Unter Stickstoffatmosphäre wurde bei 80°C 0,06 g Dibutylzinnlaurat hinzugegeben und anschließend mit 14,2 g (81 mmol) TDI (%NCO=47,8) versetzt. Nach einstündigem Rühren bei 80°C wurde das entstandene Polymere mit 92,2 g (94 mmol) PolyTHF 1000 (OHZ=114) versetzt und eine weitere Stunde bei 80°C gerührt. Es wurde mit 11,8 g (72 mmol) lsocyanatomethyldimethoxymethylsilan (%NCO=25,7) versetzt und eine weitere Stunde bei 80°C gerührt. Das Polymere wurde abgekühlt und mit 6 g Vinyltrimethoxysilan versetzt. Das Produkt wurde feuchtigkeitsdicht unter Stickstoffatmosphäre in einem Glasgefäß gelagert.

### Beispiel 12:

Die Eigenschaften der Polymeren aus den Beispielen 8,10 und 11 wurden bestimmt:

| | Polymeres | Polymeres 10 | | Polymeres 11 | |
|---|---|---|---|---|---|
| Katalysator* | DBTL | DBTL | DBU | DBTL | DBU |
| SOT* [Min] | 15 | 20 | 1 | 8 | 0,25 |
| TFT* [Min] | 180 | 240 | 30 | 90 | 15 |
| Bruchkraft* [N/mm | ] 1,1 | 0,8 | 1,0 | 0,7 | n.b. |
| Bruchdehnung* [%] | 46 | 58 | 96 | 53 | n.b. |

| | | | | | |
|---|---|---|---|---|---|
| * Filme hergestellt mit 1 % N-Aminoethyl-3-aminopropyltrimethoxysilan und 0,2%Katalysator (DBTL = Dibutylzinnlaurat ; DBU = 1,8-Diazabicyclo-[5.4.0]-undec-7-en | | | | | |

### Beispiel 13:

143,3 g (21 mmol) Polypropylenglykol 8000 (OHZ=14,0) wurden in einem 500 ml Dreihalskolben bei 100°C im Vakuum getrocknet. Unter Stickstoffatmosphäre wurde bei 80°C 0,06 g Dibutylzinnlaurat hinzugegeben und anschließend mit 28,1 g (160 mmol) TDI (%NCO=47,8) versetzt. Nach einstündigem Rühren bei 80°C wurde das entstandene Polymer mit 95,4 g (97 mmol) PolyTHF 1000 (OHZ=114) versetzt und eine weitere Stunde bei 80°C gerührt. Es wurde mit 19,5 g (83 mmol) N-Butylaminopropyltrimethoxysilan versetzt und eine weitere Stunde bei 80°C gerührt. Das Polymer wurde abgekühlt und mit 6 g Vinyltrimethoxysilan versetzt. Das Produkt wurde feuchtigkeitsdicht unter Stickstoffatmosphäre in einem Glasgefäß gelagert. Dieses Polymere zeigte eine Hautbildungszeit von 20 Minuten und eine Klebfreiezeit von ca. 2,5 Stunden (Katalyse mit 1 % N-Aminoethyl-3-aminopropyltrimethoxysilan und 0,2% DBTL).

### Beispiel 14:

143,3 g (21 mmol) Polypropylenglykol 8000 (OHZ=14,0) wurden in einem 500 ml Dreihalskolben bei 100°C im Vakuum getrocknet. Unter Stickstoffatmosphäre wird bei 80°C 0,06 g Dibutylzinnlaurat hinzugegeben und anschließend mit 28,1 g (160 mmol) TDI (%NCO=47,8) versetzt. Nach einstündigem Rühren bei 80°C wurde das entstandene Polymer mit 95,4 g (97 mmol) PolyTHF 1000 (OHZ=114) versetzt und eine weitere Stunde bei 80°C gerührt. Es wird mit 22,8 g (83 mmol) N-Cyclohexylaminometlytriethoxysilan versetzt und eine weitere Stunde bei 80°C gerührt. Das Polymer wurde abgekühlt und mit 6 g Vinyltrimethoxysilan versetzt. Das Produkt wurde feuchtigkeitsdicht unter Stickstoffatmosphäre in einem Glasgefäß gelagert.

Dieses Polymere zeigte eine Hautbildungszeit von weniger als 1 Minute und eine Klebfreiezeit von ca. 1 Stunde (Katalyse mit 1 % N-Aminoethyl-3aminopropyltrimethoxysilan und 0,2% DBU).

## Patentansprüche

1. Vernetzbare polymere Zusammensetzung mindestens enthaltend ein vernetzbares Polymeres mit einer unter geeigneten Bedingungen zur Vernetzung führenden Zahl an miteinander oder mit einem geeigneten Vernetzer reaktiven funktionellen Gruppen, wobei, die Zusammensetzung entweder
a) mindestens ein vernetzbares Polymeres enthält, dessen Polymerrückgrat mindestens zwei unterschiedliche Oxyalkyleneinheiten OX¹ und OX² enthält, wobei mindestens eine erste Oxyalkyleneinheit OX¹ mindestens zwei C-Atome zwischen zwei benachbarten Sauerstoffatomen aufweist und mindestens eine zweite Oxyalkyleneinheit OX² mindestens ein C-Atom mehr zwischen zwei benachbarten Sauerstoffatomen aufweist als die erste Oxyalkyleneinheit OX¹ oder
b) mindestens ein erstes vernetzbares Polymeres enthält, dessen Polymerrückgrat mindestens eine erste Oxyalkyleneinheit OX¹ aufweist, die mindestens zwei C-Atome zwischen zwei benachbarten Sauerstoffatomen aufweist und mindestens ein zweites vernetzbares Polymeres enthält, dessen Polymerrückgrat mindestens eine zweite Oxyalkyleneinheit OX² enthält, die mindestens ein C-Atom mehr zwischen zwei benachbarten Sauerstoffatomen aufweist als die erste Oxyalkyleneinheit OX¹ im ersten vernetzbaren Polymeren oder
c) ein Gemisch aus vernetzbaren Polymeren gemäß a) und b) enthält,
wobei das Molukulargewicht der ersten Oxyalkyleneinheiten OX¹ zwischen 7.000 und 100.000 liegt und wobei das Gewichtsverhältnis von ersten Oxyalkyleneinheiten OX¹ die mindestens zwei C-Atome zwischen zwei benachbarten Sauerstoffatomen aufweisen und zweiten Oxyalkyleneinheiten OX², die mindestens ein C-Atom mehr zwischen zwei benachbarten Sauerstoffatomen aufweisen als die ersten Oxyalkyleneinheiten OX¹, 10:90 bis 90:10 beträgt.

2. Zusammensetzung gemäß Anspruch 1, **dadurch gekennzeichnet, dass** das mindestens eine vernetzbare Polymere oder das mindestens eine erste vernetzbare Polymere und das mindestens eine zweite vernetzbare Polymere als reaktive funktionelle Gruppen entweder Isocyanatgruppen oder Silylgruppen oder beides trägt.

3. Zusammensetzung nach Anspruch 1 oder 2, **dadurch gekennzeichnet, dass** das Polymerrückgrat mindestens eines vernetzbaren Polymeren mindestens zwei unterschiedliche Oxyalkyleneinheiten OX¹ und OX² enthält, wobei die Oxyalkyleneinheiten entweder
- statistisch oder
- blockweise gemäß dem Schema
...-OX¹-OX¹-OX¹- OX¹-OX²-OX²-OX² -OX²-.....
oder
- blockweise gemäß dem Schema
...-OX²-OX²-OX¹-OX¹-OX¹ -OX¹-OX²-OX²-...
angeordnet sind.

4. Zusammensetzung nach einem der Ansprüche 1 bis 3, **dadurch gekennzeichnet, dass** ein Zusatzstoff oder ein Gemisch aus zwei oder mehr Zusatzstoffen enthalten ist.

5. Vernetzbare polymere Zusammensetzung, herstellbar durch Umsetzung von mindestens zwei Komponenten A und B, wobei
a) als Komponente A ein Isocyanat oder ein Polyisocyanat oder ein Gemisch aus zwei oder mehr Isocyanaten oder zwei oder mehr Polyisocyanaten oder einem Isocyanat und einem Polyisocyanat oder ein Gemisch aus zwei oder mehr Isocyanaten mit zwei oder mehr Polyisocyanaten und
b) als Komponente B ein Gemisch aus zwei oder mehr Polyolen eingesetzt wird, wobei Komponente B mindestens zwei Polyole mit Oxyalkyleneinheiten OX¹ und OX² enthält, wobei OX² mindestens ein C-Atom mehr zwischen zwei benachbarten Sauerstoffatomen aufweist als OX¹ und das Mischungsverhältnis der beiden Polyole mit Oxyalkyleneinheiten OX¹ und OX² 10:90 bis 90:10, bezogen auf das Gewicht, beträgt und wobei das Molukulargewicht der ersten Oxyalkyleneinheiten *OX¹* zwischen 7.000 und 100.000 liegt.

6. Vernetzbare polymere Zusammensetzung, herstellbar durch Umsetzung von mindestens drei Komponenten A, C und D, wobei
a) als Komponente A ein Isocyanat oder ein Polyisocyanat oder ein Gemisch aus zwei oder mehr Isocyanaten oder zwei oder mehr Polyisocyanaten oder einem Isocyanat und einem Polyisocyanat oder ein Gemisch aus zwei oder mehr Isocyanaten mit zwei oder mehr Polyisocyanaten und
b) als Komponente C ein Polyol mit Oxyalkyleneinheiten OX¹ und
c) als Komponente D ein Polyol mit Oxyalkyleneinheiten OX² eingesetzt wird,
wobei die Umsetzung in zwei oder mehr Schritten abläuft und in einem ersten Schritt Komponente A ganz oder teilweise mit der gesamten Komponente C oder einem Teil der Komponente C oder mit der gesamten Komponente D oder einem Teil der Komponente D umgesetzt wird und in einem zweiten Schritt das Reaktionsprodukt je nach Endgruppen und Reaktionsführung im ersten Schritt mit der gesamten verbleibenden Komponente A oder einem Teil der verbleibenden Komponente A oder mit der gesamten verbleibenden Komponente C oder einem Teil der verbleibenden Komponente C oder mit der gesamten verbleibenden Komponente D oder einem Teil der verbleibenden Komponente D umgesetzt wird und, je nach Reaktionsführung im ersten oder zweiten Schritt anschließend in einem oder mehreren weiteren Schritten die verbleibenden Komponenten A, C und D bis zum Verbrauch der Edukte mit dem Reaktionsprodukt der jeweils vorangehenden Stufe umgesetzt werden, wobei OX² mindestens ein C-Atom mehr zwischen zwei benachbarten Sauerstoffatomen aufweist als OX¹ und das Mischungsverhältnis der beiden Polyole mit Oxyalkyleneinheiten OX¹ und OX² im vernetzbaren Polymeren 10:90 bis 90:10, bezogen auf das Gewicht, beträgt und wobei das Molukulargewicht der ersten Oxyalkyleneinheiten OX¹ zwischen 7.000 und 100.000 liegt.

7. Zusammensetzung nach Anspruch 5 oder Anspruch 6, **dadurch gekennzeichnet, dass** als Isocyanat ein mindesten eine Silylgruppe tragendes Isocyanat eingesetzt wird.

8. Zusammensetzung nach Anspruch 5 oder Anspruch 6 **dadurch gekennzeichnet, dass** das Umsetzungsprodukt aus der Umsetzung der Komponenten A und B oder A, C und D, sofern es Isocyanatgruppen aufweist, mit einem Silylgruppen tragenden Amin oder einem Gemisch aus zwei oder mehr davon umgesetzt wird.

9. Verfahren zur Herstellung einer vernetzbaren polymeren Zusammensetzung, bei dem
a) mindestens ein Polymeres, dessen Polymerrückgrat mindestens zwei unterschiedliche Oxyalkyleneinheiten OX¹ und OX² enthält, wobei mindestens eine erste Oxyalkyleneinheit OX¹ mindestens zwei C-Atome zwischen zwei benachbarten Sauerstoffatomen aufweist und mindestens eine zweite Oxyalkyleneinheit OX² mindestens ein C-Atom mehr zwischen zwei benachbarten Sauerstoffatomen aufweist als die erste Oxyalkyleneinheit OX¹ mit einer unter geeigneten Bedingungen zur Vernetzung führenden Zahl an miteinander oder mit einem geeigneten Vernetzer reaktiven funktionellen Gruppen versehen wird, oder
b) mindestens ein erstes Polymeres, dessen Polymerrückgrat mindestens eine erste Oxyalkyleneinheit OX¹ aufweist, die mindestens zwei C-Atome zwischen zwei benachbarten Sauerstoffatomen aufweist und mindestens ein zweites Polymeres, dessen Polymerrückgrat mindestens eine zweite Oxyalkyleneinheit OX² enthält, die mindestens ein C-Atom mehr zwischen zwei benachbarten Sauerstoffatomen aufweist als die erste Oxyalkyleneinheit OX¹ im ersten Polymeren getrennt voneinander mit einer unter geeigneten Bedingungen zur Vernetzung führenden Zahl an miteinander oder mit einem geeigneten Vernetzer reaktiven funktionellen Gruppen, versehen und anschließend vermischt werden,
wobei das Gewichtsverhältnis von ersten Oxyalkyleneinheiten OX¹ zu zweiten Oxyalkyleneinheiten OX² 10:90 bis 90:10 beträgt und wobei das Molukulargewicht der ersten Oxyalkyleneinheiten OX¹ zwischen 7.000 und 100.000 liegt.

10. Verfahren zur Herstellung einer vernetzbaren polymeren Zusammensetzung, bei dem mindestens zwei Komponenten A und B miteinander umgesetzt werden, wobei
a) als Komponente A ein Isocyanat oder ein Polyisocyanat oder ein Gemisch aus zwei oder mehr Isocyanaten oder zwei oder mehr Polyisocyanaten oder einem Isocyanat und einem Polyisocyanat oder ein Gemisch aus zwei oder mehr Isocyanaten mit zwei oder mehr Polyisocyanaten und
b) als Komponente B ein Gemisch aus zwei oder mehr Polyolen eingesetzt wird, wobei Komponente B mindestens zwei Polyole mit Oxyalkyleneinheiten OX¹ und OX² enthält, wobei OX² mindestens ein C-Atom mehr zwischen zwei benachbarten Sauerstoffatomen aufweist als OX¹ und das Mischungsverhältnis der beiden Polyole mit Oxyalkyleneinheiten OX¹ und OX² 10:90 bis 90:10, bezogen auf das Gewicht, beträgt
und das Verhältnis der Komponenten A und B so gewählt wird, dass die Zusammensetzung eine unter geeigneten Bedingungen zur Vernetzung führende Zahl an miteinander oder mit einem geeigneten Vernetzer reaktiven funktionellen Gruppen aufweist und wobei das Molukulargewicht der ersten Oxyalkyleneinheiten OX¹ zwischen 7.000 und 100.000 liegt.

11. Verfahren nach Anspruch 10, **dadurch gekennzeichnet, dass** als Isocyanat ein mindestens eine Silylgruppe tragendes Isocyanat eingesetzt wird,

12. Verfahren zur Herstellung einer vernetzbaren polymeren Zusammensetzung, bei dem mindestens drei Komponenten A, C und D miteinander umgesetzt werden, wobei
a) als Komponente A ein Isocyanat oder ein Polyisocyanat oder ein Gemisch aus zwei oder mehr Isocyanaten oder zwei oder mehr Polyisocyanaten oder einem Isocyanat und einem Polyisocyanat oder ein Gemisch aus zwei oder mehr Isocyanaten mit zwei oder mehr Polyisocyanaten und
b) als Komponente C ein Polyol mit Oxyalkyleneinheiten OX¹ und
c) als Komponente D ein Polyol mit Oxyalkyleneinheiten OX² eingesetzt wird,
wobei die Umsetzung in zwei oder mehr Schritten abläuft und in einem ersten Schritt Komponente A ganz oder teilweise mit der gesamten Komponente C oder einem Teil der Komponente C oder mit der gesamten Komponente D oder einem Teil der Komponente D umgesetzt wird und in einem zweiten Schritt das Reaktionsprodukt je nach Endgruppen und Reaktionsführung im ersten Schritt mit der gesamten verbleibenden Komponente A oder einem Teil der verbleibenden Komponente A oder mit der gesamten verbleibenden Komponente C oder einem Teil der verbleibenden Komponente C oder mit der gesamten verbleibenden Komponente D oder einem Teil der verbleibenden Komponente D umgesetzt wird und, je nach Reaktionsführung im ersten oder zweiten Schritt anschließend in einem oder mehreren weiteren Schritten die verbleibenden Komponenten A, C und D bis zum Verbrauch der Edukte mit dem Reaktionsprodukt der jeweils vorangehenden Stufe umgesetzt werden, wobei OX² mindestens ein C-Atom mehr zwischen zwei benachbarten Sauerstoffatomen aufweist als OX¹ und das Mischungsverhältnis der beiden Polyole mit Oxyalkyleneinheiten OX¹ und OX² im vernetzbaren Polymeren 10:90 bis 90:10, bezogen auf das Gewicht, beträgt und das Verhältnis der Komponenten A, C und D so gewählt wird, dass die Zusammensetzung eine unter geeigneten Bedingungen zur Vernetzung führende Zahl an miteinander oder mit einem geeigneten Vernetzer reaktiven funktionellen Gruppen aufweist und wobei das Molukulargewicht der ersten Oxyalkyleneinheiten OX¹ zwischen 7.000 und 100.000 liegt.

13. Verfahren nach Anspruch 12, **dadurch gekennzeichnet, dass** als Isocyanat en mindestens eine Silylgruppe tragendes Isocyanat eingesetzt wird.

14. Verfahren nach einem der Ansprüche 9 bis 13, **dadurch gekennzeichnet, dass** ein Isocyanatgruppen aufweisendes Reaktionsprodukt mit mindestens einem mindestens eine Silylgruppe tragenden Amin umgesetzt wird.

15. Verwendung einer Zusammensetzung nach einem der Ansprüche 1 bis 8 oder einer nach einem der Ansprüche 9 bis 14 hergestellten Zusammensetzung als Klebstoff, Dichtmasse, Oberflächenbeschichtungsmittel, Spachtelmasse oder zur Herstellung von Formteilen.

## Claims

1. Crosslinkable polymeric composition at least comprising a crosslinkable polymer having functional groups, reactive with one another or with a suitable crosslinker, in a number which leads to crosslinking under suitable conditions, the composition comprising either
a) at least one crosslinkable polymer whose polymer backbone comprises at least two different oxyalkylene units OX¹ and OX², at least one first oxyalkylene unit OX¹ having at least two carbon atoms between two neighbouring oxygen atoms and at least one second oxyalkylene unit OX² having at least one more carbon atom between two neighbouring oxygen atoms than the first oxyalkylene unit OX¹, or
b) at least one first crosslinkable polymer whose polymer backbone comprises at least one first oxyalkylene unit OX¹ having at least two carbon atoms between two neighbouring oxygen atoms and at least one second crosslinkable polymer whose polymer backbone comprises at least one second oxyalkylene unit OX² having at least one more carbon atom between two neighbouring oxygen atoms than the first oxyalkylene unit OX¹ in the first crosslinkable polymer, or
c) a mixture of crosslinkable polymers according to a) and b),
the molecular weight of the first oxyalkylene units OX¹ being between 7000 and 100 000 and the weight ratio of first oxyalkylene units OX¹, having at least two carbon atoms between two neighbouring oxygen atoms, and second oxyalkylene units OX², having at least one more carbon atom between two neighbouring oxygen atoms than the first oxyalkylene units OX¹, being in the range from 10:90 to 90:10.

2. Composition according to Claim 1, **characterized in that** the at least one crosslinkable polymer or the at least one first crosslinkable polymer and the at least one second crosslinkable polymer carries either isocyanate groups or silyl groups, or both, as reactive functional groups.

3. Composition according to Claim 1 or 2, **characterized in that** the polymer backbone of at least one crosslinkable polymer comprises at least two different oxyalkylene units OX¹ and OX², the oxyalkylene units being arranged either
- randomly or
- in blocks according to the scheme
...-OX¹-OX¹-OX¹-OX¹-OX²-OX²-OX²-OX²-...
or
- in blocks according to the scheme
...-OX²-OX²-OX¹-OX¹-OX¹-OX¹-OX²-OX²-...

4. Composition according to any one of the Claims 1 to 3, **characterized in that** an additive or a mixture of two or more additives is present.

5. Crosslinkable polymeric composition obtainable by reaction of at least two components A and B, where
a) component A comprises an isocyanate or a polyisocyanate or a mixture of two or more isocyanates or two or more polyisocyanates or of an isocyanate and of a polyisocyanate or a mixture of two or more isocyanates with two or more polyisocyanates, and
b) component B comprises a mixture of two or more polyols, component B comprising at least two polyols having oxyalkylene units OX¹ and OX², OX² having at least one more carbon atom between two neighbouring oxygen atoms than OX¹ and the mixing ratio of the two polyols with oxyalkylene units OX¹ and OX² being in the range from 10:90 to 90:10, by weight, and the molecular weight of the first oxyalkylene units OX¹ being between 7000 and 100 000.

6. Crosslinkable polymeric composition obtainable by reaction of at least three components A, C and D, where
a) component A comprises an isocyanate or a polyisocyanate or a mixture of two or more isocyanates or two or more polyisocyanates or of an isocyanate and of a polyisocyanate or a mixture of two or more isocyanates with two or more polyisocyanates, and
b) component C comprises a polyol having oxyalkylene units OX¹, and
c) component D comprises a polyol having oxyalkylene units OX²,
the reaction proceeding in two or more steps, a first step comprising reacting component A wholly or partly with the entire component C or with a portion of component C or with the entire component D or with a portion of component D and a second step of the reaction product being reacted, depending on the end groups and reaction control in the first step, with the entire remaining component A or with a portion of the remaining component A or with the entire remaining component C or with a portion of the remaining component C or with the entire remaining component D or with a portion of the remaining component D and, depending on the reaction control in the first or second step, subsequently one or more further steps of the remaining components A, C and D being reacted with the reaction product from the respective preceding stage until the reactants are consumed, wherein OX² has at least one more carbon atom between two neighbouring oxygen atoms than OX¹ and the mixing ratio of the two polyols with oxyalkylene units OX¹ and OX² in the crosslinkable polymer being in the range from 10:90 to 90:10, by weight, and the molecular weight of the first oxyalkylene units OX¹ is between 7000 and 100 000.

7. Composition according to Claim 5 or Claim 6, **characterized in that** isocyanate comprises an isocyanate carrying at least one silyl group.

8. Composition according to Claim 5 or Claim 6, **characterized in that** the reaction product from the reaction of components A and B or A, C and D is reacted, if it has isocyanate groups, with a silyl-carrying amine or with a mixture of two or more thereof.

9. Process for producing a crosslinkable polymeric composition wherein
a) at least one polymer whose polymer backbone comprises at least two different oxyalkylene units OX¹ and OX², at least one first oxyalkylene unit OX¹ having at least two carbon atoms between two neighbouring oxygen atoms and at least one second oxyalkylene unit OX² having at least one more carbon atom between two neighbouring oxygen atoms than the first oxyalkylene unit OX¹, is provided with functional groups, reactive with one another or with a suitable crosslinker, in a number which leads to crosslinking under suitable conditions, or
b) at least one first polymer whose polymer backbone comprises at least one first oxyalkylene unit OX¹ having at least two carbon atoms between two neighbouring oxygen atoms and at least one second polymer whose polymer backbone comprises at least one second oxyalkylene unit OX² which has at least one more carbon atom between two neighbouring oxygen atoms than the first oxyalkylene unit OX¹ in the first polymer are separately provided with functional groups, reactive with one another or with a suitable crosslinker, in a number which leads to crosslinking under suitable conditions and are subsequently mixed,
the weight ratio of first oxyalkylene units OX¹ to second oxyalkylene units OX² being in the range from 10:90 to 90:10 and the molecular weight of the first oxyalkylene units OX¹ being between 7000 and 100 000.

10. Process for producing a crosslinkable polymeric composition wherein at least two components A and B are reacted with one another, where
a) component A comprises an isocyanate or a polyisocyanate or a mixture of two or more isocyanates or two or more polyisocyanates or of an isocyanate and of a polyisocyanate or a mixture of two or more isocyanates with two or more polyisocyanates, and
b) component B comprises a mixture of two or more polyols, component B comprising at least two polyols having oxyalkylene units OX¹ and OX², OX² having at least one more carbon atom between two neighbouring oxygen atoms than OX¹ and the mixing ratio of the two polyols with oxyalkylene units OX¹ and OX² being in the range from 10:90 to 90:10, by weight,
and the ratio of the components A and B being chosen such that the composition has functional groups, reactive with one another or with a suitable crosslinker, in a number which leads to crosslinking under suitable conditions and the molecular weight of the first oxyalkylene units OX¹ being between 7000 and 100 000.

11. Process according to Claim 10, **characterized in that** isocyanate comprises an isocyanate carrying at least one silyl group.

12. Process for producing a crosslinkable polymeric composition wherein at least three components A, C and D are reacted with one another, where
a) component A comprises an isocyanate or a polyisocyanate or a mixture of two or more isocyanates or two or more polyisocyanates or of an isocyanate and of a polyisocyanate or a mixture of two or more isocyanates with two or more polyisocyanates, and
b) component C comprises a polyol having oxyalkylene units OX¹, and
c) component D comprises a polyol having oxyalkylene units OX²,
the reaction proceeding in two or more steps, a first step comprising reacting component A wholly or partly with the entire component C or with a portion of component C or with the entire component D or with a portion of component D and a second step of the reaction product being reacted, depending on the end groups and reaction control in the first step, with the entire remaining component A or with a portion of the remaining component A or with the entire remaining component C or with a portion of the remaining component C or with the entire remaining component D or with a portion of the remaining component D and, depending on the reaction control in the first or second step, subsequently one or more further steps of the remaining components A, C and D being reacted with the reaction product from the respective preceding stage until the reactants are consumed, wherein OX² has at least one more carbon atom between two neighbouring oxygen atoms than OX¹ and the mixing ratio of the two polyols with oxyalkylene units OX¹ and OX² in the crosslinkable polymer being in the range from 10:90 to 90:10, by weight, and the ratio of components A, C and D being chosen such that the composition has functional groups, reactive with one another or with a suitable crosslinker, in a number which leads to crosslinking under suitable conditions and the molecular weight of the first oxyalkylene units OX¹ is between 7000 and 100 000.

13. Process according to Claim 12, **characterized in that** isocyanate comprises an isocyanate carrying at least one silyl group.

14. Process according to any one of the Claims 9 to 13, **characterized in that** a reaction product having isocyanate groups is reacted with at least one amine carrying at least one silyl group.

15. Use of a composition according to any one of the Claims 1 to 8 or of a composition obtained according to any one of the Claims 9 to 14, as an adhesive, sealant, surface-coating agent, filler or for producing moulded parts.

## Revendications

1. Composition polymère réticulable contenant au moins un polymère réticulable qui comporte un nombre de groupes fonctionnels réactifs, capables de réticulation entre eux ou à l'aide d'un réticulant approprié, dans des conditions appropriées, où la composition
a) contient au moins un polymère réticulable dont le squelette de polymère présente au moins deux unités oxyalkylène différentes OX¹ et OX², au moins une première unité oxyalkylène OX¹ présentant au moins deux atomes de C entre deux atomes d'oxygène contigus, et au moins une deuxième unité oxyalkylène OX² présente au moins un atome de C de plus entre deux atomes d'oxygène contigus que la première unité oxyalkylène OX¹, ou
b) contient au moins un premier polymère réticulable, dont le squelette de polymère présente au moins une première unité oxyalkylène OX¹ qui comprend au moins deux atomes de C entre deux atomes d'oxygène contigus et au moins un deuxième polymère réticulable, dont le squelette de polymère présente au moins une deuxième unité oxyalkylène OX², qui présente au moins un atome de C de plus que la première unité oxyalkylène OX¹ entre deux atomes d'oxygène contigus dans le premier polymère réticulable, ou
c) contient un mélange de polymères réticulables selon a) et b),
la masse moléculaire de la première unité oxyalkylène OX¹ étant comprise entre 7000 et 100 000 et le rapport pondéral entre la première unité oxyalkylène OX¹ qui comprend au moins deux atomes de C entre deux atomes d'oxygène contigus et la deuxième unité oxyalkylène OX², qui présente au moins un atome de C de plus que la première unité oxyalkylène OX¹ entre deux atomes d'oxygène contigus, étant de 10:90 à 90:10.

2. Composition selon la revendication 1, **caractérisée en ce que** le au moins un polymère réticulable ou le au moins un premier polymère réticulable et le au moins un deuxième polymère réticulable portent, en tant que groupes réactifs fonctionnels, soit des groupes isocyanate soit des groupes silyle, soit les deux.

3. Composition selon la revendication 1 ou 2, **caractérisée en ce que** le squelette de polymère d'au moins un polymère réticulable contient au moins deux unités oxyalkylène différentes OX¹ et OX², les unités oxyalkylène ayant une structure soit
- statistique soit
- séquencée selon le schéma
...-OX¹-OX¹-OX¹- OX¹-OX²-OX²-OX² -OX²- ...
soit
- séquencée selon le schéma
...-OX²-OX²-OX¹-OX¹-OX¹-OX¹-OX²-OX²-....

4. Composition selon l'une quelconque des revendications 1 à 3, **caractérisée en ce qu'**elle contient un additif ou un mélange de deux ou de plus de deux additifs.

5. Composition polymère réticulable que l'on peut obtenir par réaction d'au moins deux composants A et B, dans laquelle
a) en tant que composant A, on met en oeuvre un isocyanate ou un polyisocyanate ou un mélange de deux ou plus de deux isocyanates ou de deux ou plus de deux polyisocyanates, ou d'un isocyanate et d'un polyisocyanate, ou un mélange de deux ou plus de deux isocyanates avec deux ou plus de deux polyisocyanates, et
b) en tant que composant B, on met en oeuvre un mélange de deux ou plus de deux polyols, le composant B contenant au moins deux polyols qui comprennent des unités oxyalkylène OX¹ et OX², où l'unité OX² présente, entre deux atomes d'oxygène contigus, au moins un atome de C de plus que OX¹, et le rapport de mélange, exprimé en poids, des deux polyols comprenant les unités oxyalkylène OX¹ et OX² est de 10:90 à 90:10, et où la masse moléculaire de la première unité oxyalkylène OX¹ est comprise entre 7000 et 100 000.

6. Composition polymère réticulable, que l'on peut obtenir par réaction d'au moins trois composants A, C et D, où l'on met en oeuvre
a) comme composant A, un isocyanate ou un polyisocyanate ou un mélange de deux ou plus de deux isocyanates ou de deux ou plus de deux polyisocyanates ou d'un isocyanate et d'un polyisocyanate ou un mélange de deux ou plus de deux isocyanates avec deux ou plus de deux polyisocyanates, et
b) comme composant C, un polyol comprenant des unités oxyalkylène OX¹ et
c) comme composant D, un polyol comprenant des unités oxyalkylène OX²,
où la réaction se déroule en deux ou plus de deux étapes, et dans une première étape, le composant A est mis à réagir partiellement ou totalement avec la totalité du composant C ou avec une partie du composant C ou avec la totalité du composant D ou avec une partie du composant D et dans une deuxième étape, le produit réactionnel est mis à réagir, en fonction des groupes terminaux et des conditions réactionnelles, dans la première étape avec la totalité du composant A restant ou avec une partie du composant A restant ou avec la totalité du composant C restant ou avec une partie du composant C restant ou avec la totalité du composant D restant ou avec une partie du composant D restant et ensuite, selon les conditions réactionnelles dans la première ou deuxième étape, dans une ou plusieurs étapes consécutives, les composants A, C et D restants sont mis à réagir, jusqu'à épuisement des produits de départ, avec le produit réactionnel de l'étape précédente respective, OX² présentant au moins un atome de C de plus entre deux atomes d'oxygène contigus que OX¹, et le rapport de mélange, exprimé en poids, des deux polyols avec les unités oxyalkylène OX¹ et OX² étant, dans le polymère réticulable, de 10:90 à 90:10 et la masse moléculaire de la première unité oxyalkylène OX¹ étant comprise entre 7000 et 100 000.

7. Composition selon la revendication 5 ou 6, **caractérisée en ce que** comme isocyanate, on met en oeuvre un isocyanate qui porte au moins un groupe silyle.

8. Composition selon la revendication 5 ou 6, **caractérisée en ce que** le produit réactionnel issu de la réaction des composants A et B ou A, C et D, dans la mesure où il présente des groupes isocyanate, est mis à réagir avec une amine qui porte des groupes silyle, ou avec un mélange de deux ou plus de deux d'entre elles.

9. Procédé de préparation d'une composition polymère réticulable, dans lequel
a) on munit au moins un polymère, dont le squelette de polymère présente au moins deux unités oxyalkylène différentes OX¹ et OX², au moins une première unité oxyalkylène OX¹ présentant au moins deux atomes de C entre deux atomes d'oxygène contigus, et au moins une deuxième unité oxyalkylène OX² présentant au moins un atome de C de plus que la première unité oxyalkylène OX¹ entre deux atomes d'oxygène contigus, d'un nombre de groupes fonctionnels réactifs, capables de réticulation entre eux ou à l'aide d'un réticulant approprié, dans des conditions appropriées, ou
b) on munit au moins un premier polymère, dont le squelette de polymère présente au moins une première unité oxyalkylène OX¹ comprenant au moins deux atomes de C entre deux atomes d'oxygène contigus et au moins un deuxième polymère dont le squelette de polymère présente au moins une deuxième unité oxyalkylène OX² comprenant au moins un atome de C de plus que la première unité oxyalkylène OX¹ entre deux atomes d'oxygène contigus dans le premier polymère, séparément, d'un nombre de groupes fonctionnels réactifs, capables de réticulation entre eux ou à l'aide d'un réticulant approprié, dans des conditions appropriées, et ensuite on les mélange,
le rapport pondéral entre la première unité oxyalkylène OX¹ et la deuxième unité oxyalkylène OX² étant de 10:90 à 90:10 et la masse moléculaire de la première unité oxyalkylène OX¹ étant comprise entre 7000 et 100 000.

10. Procédé de préparation d'une composition polymère réticulable, dans lequel on fait réagir entre eux au moins deux composants A et B, où
a) comme composant A, on met en oeuvre un isocyanate ou un polyisocyanate ou un mélange de deux ou plus de deux isocyanates ou de deux ou plus de deux polyisocyanates, ou d'un isocyanate et d'un polyisocyanate, ou un mélange de deux ou plus de deux isocyanates avec deux ou plus de deux polyisocyanates, et
b) comme composant B, on met en oeuvre un mélange de deux ou plus de deux polyols, le composant B présentant au moins deux polyols qui comprennent des unités oxyalkylène OX¹ et OX², où OX² présente au moins un atome de C de plus que OX¹ entre deux atomes d'oxygène contigus, et le rapport pondéral entre deux polyols comprenant des unités oxyalkylène OX¹ et OX² étant de 10:90 à 90:10,
et le rapport des composants A et B étant choisi de façon à ce que la composition comprenne un nombre de groupes fonctionnels réactifs, capables de réticulation entre eux ou à l'aide d'un réticulant approprié, dans des conditions appropriées, et la masse moléculaire de la première unité oxyalkylène OX¹ soit comprise entre 7000 et 100 000.

11. Procédé selon la revendication 10, **caractérisé en ce que** comme isocyanate, on met en oeuvre un isocyanate qui porte au moins un groupe silyle.

12. Procédé de préparation d'une composition polymère réticulable, dans lequel au moins trois composants A, C et D sont mis à réagir entre eux, dans lequel
a) comme composant A, on met en oeuvre un isocyanate ou un polyisocyanate ou un mélange de deux ou plus de deux isocyanates ou de deux ou plus de deux polyisocyanates ou d'un isocyanate et un polyisocyanate, ou un mélange de deux ou plus de deux isocyanates avec deux ou plus de deux polyisocyanates, et
b) comme composant C, on met en oeuvre un polyol qui présente des unités oxyalkylène OX¹ et
c) comme composant D, on met en oeuvre un polyol qui présente des unités oxyalkylène OX²,
où la réaction se déroule en deux ou plus de deux étapes, et dans la première étape, le composant A est mis à réagir partiellement ou totalement avec la totalité du composant C ou avec une partie du composant C ou avec la totalité du composant D ou avec une partie du composant D, et dans une deuxième étape, le produit réactionnel est mis à réagir, en fonction des groupes terminaux et des conditions réactionnelles dans la première étape, avec la totalité du composant A restant ou avec une partie du composant A restant ou avec la totalité du composant C restant ou avec une partie du composant C restant ou avec la totalité du composant D restant ou avec une partie du composant D restant, et ensuite, selon les conditions réactionnelles dans la première ou la deuxième étape dans une ou plusieurs étapes consécutives, les composants A, C et D restants sont mis à réagir, jusqu'à épuisement des produits de départ, avec le produit réactionnel de l'étape précédente, où OX² présente au moins un atome de C de plus entre deux atomes d'oxygène contigus que OX¹ et le rapport de mélange des deux polyols comprenant les unités oxyalkylène OX¹ et OX² dans les polymères réticulables est de 10:90 à 90:10, exprimé en poids, et le rapport des composants A, C et D est choisi de façon à ce que la composition présente un nombre de groupes fonctionnels réactifs, capables de réticulation entre eux ou à l'aide d'un réticulant approprié, dans des conditions appropriées, et la masse moléculaire de la première unité oxyalkylène OX¹ soit comprise entre 7000 et 100 000.

13. Procédé selon la revendication 12, **caractérisé en ce que** comme isocyanate, on met en oeuvre un isocyanate qui porte au moins un groupe silyle.

14. Procédé selon l'une quelconque des revendications 9 à 13, **caractérisé en qu'**un produit réactionnel qui présente des groupes isocyanate est mis à réagir avec au moins une amine qui présente au moins un groupe silyle.

15. Utilisation d'une composition selon l'une quelconque des revendications 1 à 8, ou d'une composition obtenue selon l'une quelconque des revendications 9 à 14, comme adhésif, masse d'étanchéité, agent de revêtement de surface, mastic, ou pour la préparation de pièces moulées.
